# EUROPEAN PATENT APPLICATION

(11) **EP 4 793 754 A1**
(43) Date of publication of application: **19.08.2026**
(21) Application number: 26158275.3
(22) Date of filing: 12.02.2026
(51) Int. Cl.: G06F 3/16, G10L 15/22, H04N 21/422

(54) **DISPLAY DEVICE FOR PROVIDING RECOMMENDED KEYWORDS**

(30) Priority: 13.02.2025 KR 20250018937; 28.05.2025 WO PCT/KR2025/007287
(71) Applicant: LG Electronics Inc., Yeongdeungpo-gu Seoul 07336 (KR)
(72) Inventor: KIM, Yeonjin, 07796 Seoul (KR); KIM, Yunam, 07796 Seoul (KR)
(74) Representative: Vossius & Partner Patentanwälte Rechtsanwälte mbB

(57) **Abstract**

A display device for updating a prompt by providing keyword highlights and recommended keywords can include a user input interface configured to receive a voice input or text input subsequent to a key input of a specific button on a remote control device; a display configured to display an input prompt corresponding to the voice input or a recommended keyword list based on the input prompt; and a processor configured to highlight at least one or more keywords in the input prompt and display recommended keyword lists associated with the highlighted keywords on the display.

## Description

### BACKGROUND

### 1. Field

The present disclosure relates to a display device for providing recommended keywords. More specifically, the present disclosure relates to a display device for updating a prompt by providing keyword highlights and recommended keywords.

### 2. Description of the Related Art

Recently, the provision of various services utilizing generative artificial intelligence (Al)-based applications has been rapidly increasing. Generative AI applications are artificial intelligence (Al)-based applications for generating new content, such as text, images, audio, and video, according to a user request. These AI-based applications are spreading across various fields, including a digital TV.

For example, a user can make a request to generate a desired image by executing an AI application on a display device such as a digital TV. In this regard, the user can input a prompt describing image details such as an object of an image, a background, and an image style using a remote control or the like. However, due to limitations in the input method of a digital TV, there is an issue that takes a long time for the user to input the prompt and is difficult to operate.

In addition, in terms of diversity, there is an issue that is difficult for the user to write a diverse and detailed prompt when inputting the prompt. Due to this, the generated image can be monotonous and limited. In addition, in terms of efficiency, there is an issue in which a preference for each user, for example, the user's preferred image style, must be repeatedly input each time the prompt is written.

### SUMMARY

The present disclosure aims to solve the foregoing and other problems, and is intended to provide an AI system including a display device and a generative AI server for updating a prompt by providing keyword highlights and recommended keywords.

The present disclosure is intended to solve an issue that takes a long time for a user to input the prompt and is difficult to operate when making a request to generate a desired image by executing an AI application on a display device such as a digital TV.

The present disclosure is intended to solve an issue that is difficult for the user to write a diverse and detailed prompt when inputting the prompt in terms of diversity.

The present disclosure is intended to solve an issue in which a preference for each user, for example, the user's preferred image style, must be repeatedly input each time the prompt is written in terms of efficiency.

A display device according to the present disclosure can include a user input interface configured to receive a voice input or text input subsequent to a key input of a specific button on a remote control device; a display configured to display an input prompt corresponding to the voice input or text input and a recommended keyword list based on the input prompt; and a processor configured to highlight at least one or more keywords in the input prompt and display recommended keyword lists associated with the highlighted keywords on the display.

According to an embodiment, the processor can include a generative AI output module configured to execute a generative AI application and display the input prompt and the recommended keyword list on the display; and a generative AI control module configured to acquire at least one or more highlight keywords based on the input prompt and the recommended keyword lists in conjunction with a generative AI server.

According to an embodiment, the generative AI output module can generate, in response to receiving the voice input or the text input from the user input interface, a corresponding input prompt and transmit it to the generative AI control module, receive, in response to transmitting the input prompt, one or more highlight keywords and recommended keyword lists based on the input prompt from the generative AI control module, highlight parts associated with the highlight keywords in the input prompt and recommended keyword list, and display the highlighted input prompt and recommended keyword list on the display.

According to an embodiment, the generative AI control module can generate, in response to receiving the input prompt from the generative AI output module, a recommended keyword request including the input prompt, determine at least one or more highlight keywords in the input prompt, and transmit the recommended keyword request to the generative AI server so as to generate recommended keyword lists associated with the determined highlight keywords, receive, in response to transmitting the recommended keyword request, at least one or more highlight keywords and recommended keyword lists based on the input prompt from the generative AI server, and transmit the one or more highlight keywords and the recommended keyword lists to the AI output module.

According to an embodiment, the one or more highlight keywords can include at least one of a first keyword associated with an object included in the input prompt, a second keyword associated with a background included in the input prompt, and a third keyword associated with an image style included in the input prompt, wherein keywords corresponding to the first keyword, the second keyword, and the third keyword in the input prompt are respectively highlighted in a first color, a second color, and a third color.

According to an embodiment, the first keyword associated with the object can include at least one of keywords referring to the object or keywords describing a feature of the object, wherein keywords corresponding to a keyword referring to the object and a keyword describing the feature of the object in the input prompt are respectively highlighted in different colors.

According to an embodiment, the recommended keyword list can include at least one of a recommended object keyword list associated with the first keyword, a recommended background keyword list associated with the second keyword, and a recommended style keyword list associated with the third keyword, wherein the recommended object keyword list, the recommended background keyword list, and the recommended style keyword list in the recommended keyword list are respectively highlighted with a first color, a second color, and a third color.

According to an embodiment, the generative AI output module can update, in response to one recommended keyword being selected from the recommended keyword list, the input prompt with an update prompt based on the selected recommended keyword, and display the update prompt on the display.

According to an embodiment, the generative AI output module can replace, when one recommended keyword is selected from the recommended object keyword list or recommended background keyword list, a keyword corresponding to the selected recommended keyword in the input prompt with the selected recommended keyword, and append, when one recommended keyword is selected from among the recommended style keyword list, the selected recommended keyword after the input prompt.

According to an embodiment, the generative AI output module can transmit the update prompt to the generative AI control module, receive, in response to transmitting the update prompt, one or more update highlight keywords and update recommended keyword lists based on the update prompt from the generative AI control module, highlight parts associated with the update highlight keywords in the update prompt and update recommended keyword list, and display the highlighted update prompt and update recommended keyword list on the display.

According to an embodiment, the generative AI control module can generate, in response to receiving the update prompt from the generative AI output module, a recommended keyword request including the update prompt, determine at least one or more highlight keywords in the update prompt, and transmit the recommended keyword request to the generative AI server so as to generate recommended keyword lists associated with the determined highlight keywords, receive, in response to transmitting the recommended keyword request, at least one or more update highlight keywords and update recommended keyword lists based on the update prompt from the generative AI server, and transmit the one or more update highlight keywords and the update recommended keyword lists to the AI output module.

According to an embodiment, the generative AI control module can generate, in response to a key input or voice input into a remote control device associated with an image generation request, an image generation request including the input prompt, transmit the image generation request to the generative AI server so as to generate an AI image based on the input prompt, receive, in response to transmitting the image generation request, an image storage location representing a location where the AI image is stored from the generative AI server, access, based on the image storage location, a separate database to download the AI image, and store the downloaded AI image in a database of the display device, and transmit it to the generative AI output module so as to be displayed on the display along with the input prompt.

According to an embodiment, the generative AI output module can display the AI image as a standby screen of the display in response to a key input or voice input into a remote control device associated with a request to set a standby mode.

According to an embodiment, the display can operate in a first generative AI execution mode or a second generative AI execution mode, wherein the generative AI output module displays, when the first generative AI execution mode is triggered, an AI image generation guide screen including a prompt input window configured to receive the input prompt on the display, and displays, when the second generative AI execution mode is triggered, an AI image generation idea acquisition screen including one or more recommended words on the display.

According to an embodiment, in the second generative AI execution mode, the generative AI output module can generate, in response to one word being selected from among the one or more recommended words, a random prompt including the selected word to transmit it to the generative AI control module, receive, in response to transmitting the random prompt, at least one or more highlight keywords and recommended keyword lists based on the random prompt from the generative AI control module, highlight keywords associated with the highlight keywords in the random prompt and the recommended keyword list, and display the highlighted random prompt and the recommended keyword list on the display.

According to an embodiment, the generative AI control module can generate, in response to receiving the random prompt from the generative AI output module, a recommended keyword request including the random prompt, determine at least one or more highlight keywords in the random prompt, and transmit the recommended keyword request to the generative AI server so as to generate recommended keyword lists associated with the determined highlight keywords, receive, in response to transmitting the recommended keyword request, one or more highlight keywords and recommended keyword lists based on the random prompt from the generative AI server, and transmit the one or more highlight keywords and recommended keyword lists to the generative AI output module.

According to an embodiment, the generative AI output module can execute, in response to a key input or voice input into a remote control device associated with an image editing request, an image editing application to display one or more images stored in the database on the display, generate, in response to one image being selected from among the one or more images, an editing prompt associated with the selected image to transmit it to the generative AI control module, receive, in response to transmitting the editing prompt, at least one or more highlight keywords and recommended keyword lists based on the editing prompt from the generative AI control module, highlight keywords associated with the highlight keywords in the editing prompt and the recommended keyword list, and display the highlighted editing prompt and the recommended keyword list on the display.

According to an embodiment, the generative AI control module can generate, in response to receiving the editing prompt from the generative AI output module, a recommended keyword request including the editing prompt, determine at least one or more highlight keywords in the editing prompt, and transmit the recommended keyword request to the generative AI server so as to generate recommended keyword lists associated with the determined highlight keywords, receive, in response to transmitting the recommended keyword request, one or more highlight keywords and recommended keyword lists based on the editing prompt from the generative AI server, and transmit the one or more highlight keywords and recommended keyword lists to the generative AI output module.

According to this specification, convenience for a prompt input method can be provided when generating an AI image using a digital TV. A user can conveniently generate an image by utilizing recommended keywords provided without having to write or modify a prompt on his or her own. In addition, keywords can be determined in an input prompt by utilizing AI and highlighted along with recommended keywords associated therewith, thereby allowing core keywords to be intuitively recognized within the prompt.

According to this specification, a prompt including specific and diverse elements for generating an AI image can be generated. Various recommended keywords can be provided based on a user input prompt, thereby generate images that are similar to and richer than an image desired by a user.

According to this specification, a customized prompt according to a user preference can be provided when generating an AI image. In addition, a user can utilize his or her own generated and modified AI image as a standby screen of a display device, thereby allowing a more personalized product experience.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a block diagram showing a configuration of a display device for providing recommended keywords according to one embodiment of the present disclosure;
FIG. 2 is a diagram for explaining a generative AI server according to an embodiment of the present disclosure;
FIG. 3 is a diagram for explaining an AI system including a display device according to an embodiment of the present disclosure;
FIG. 4 shows an operational flow diagram between each module of a display device and a generative AI server for updating a prompt by providing keyword highlights and recommended keywords according to the present disclosure;
FIG. 5 shows an exemplary screen of a display device that updates a prompt by providing keyword highlights and recommended keywords according to the present disclosure;
FIG. 6 shows an operational flow diagram between each module of a display device and a generative AI server for updating a prompt and a recommended keyword list by selecting one of recommended keyword lists according to the present disclosure;
FIGS. 7 to 9 show exemplary screens of a display device for updating a prompt and a recommended keyword list by selecting a recommended keyword associated with an object or background according to the present disclosure;
FIG. 10 shows an operational flow diagram between each module of a display device and a server for updating an input prompt and a recommended keyword list by selecting one of recommended style keyword lists according to the present disclosure;
FIG. 11 shows an operational flow diagram between each module of a display device and a generative AI server for generating an AI image based on a prompt and setting it as a display standby screen according to the present disclosure;
FIGS. 12 and 13 show exemplary screens of a display device for generating an AI image based on a prompt and setting it as a display standby screen according to the present disclosure;
FIGS. 14 and 15 show exemplary screens of a display device for providing an idea acquisition screen for AI image generation according to the present disclosure;
FIG. 16 shows an exemplary screen of a display device for updating a prompt and a recommended keyword list by selecting one of recommended keyword lists by a user utterance according to the present disclosure;
FIGS. 17 and 18 show exemplary screens of a display device for editing an image by utilizing an editing prompt in an image editing application according to the present disclosure; and
FIG. 19 shows a flow diagram of a method for providing recommended keywords performed by a display device and an AI system including the same.

### DETAILED DESCRIPTION OF THE EMBODIMENTS

It should be noted that technical terms used herein are merely used to describe a specific embodiment, but are not intended to limit the present disclosure. In addition, a singular expression used herein can include a plural expression unless clearly defined otherwise in the context. The suffixes "module" and "part" for elements used in the following description are given or used interchangeably in consideration of only the ease of writing the specification, and do not have meanings or roles that are distinguished from each other by themselves.

As used herein, terms such as "comprise" or "include" should not be construed to necessarily include all elements or steps described herein, and should be construed not to include some elements or some steps thereof, or should be construed to further include additional elements or steps.

In addition, in describing technologies disclosed herein, when it is determined that a detailed description of known technologies related thereto can unnecessarily obscure the subject matter disclosed herein, the detailed description will be omitted.

Furthermore, the accompanying drawings are provided only for a better understanding of the embodiments disclosed herein and are not intended to limit technical concepts disclosed herein, and therefore, it should be understood that the accompanying drawings include all modifications, equivalents and substitutes within the concept and technical scope of the present disclosure. In addition, not only individual embodiments described below but also a combination of the embodiments may, of course, fall within the concept and technical scope of the present disclosure, as modifications, equivalents or substitutes included in the concept and technical scope of the present disclosure.

Hereinafter, embodiments disclosed herein will be described in detail with reference to the accompanying drawings.

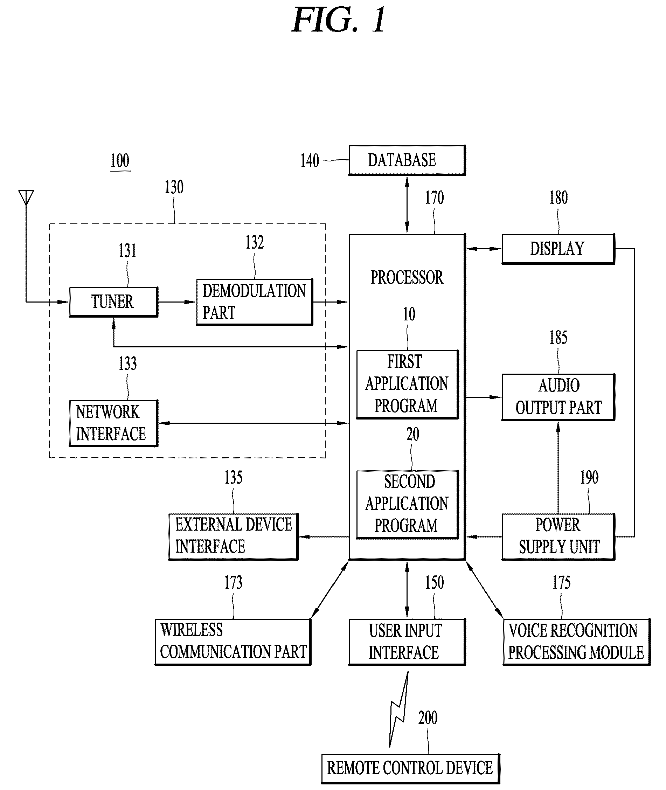

FIG. 1 is a block diagram showing a configuration of a display device according to one embodiment of the present disclosure.

Referring to FIG. 1, a display device 100 can include a broadcast receiving part 130, an external device interface 135, a database 140, a user input interface 150, a processor 170, a wireless communication part 173, a voice recognition processing module 175, a display 180, an audio output part 185, and a power supply part 190.

The broadcast receiving part 130 can include a tuner part 131, a demodulation part 132, and a network interface 133.

The tuner part 131 can select a specific broadcast channel according to a channel selection command. The tuner part 131 can receive a broadcast signal for a specific broadcast channel that has been selected.

The demodulation part 132 can separate the received broadcast signal into a video signal, an audio signal, and a data signal related to the broadcast program, and can restore the separated video signal, audio signal, and data signal into a form that can be output.

The network interface 133 can provide an interface for connecting the display device 100 to a wired/wireless network including the Internet network. The network interface 133 can transmit or receive data to or from other users or other electronic devices through the connected network or another network linked to the connected network.

The network interface 133 can access a predetermined web page through the connected network or another network linked to the connected network. That is, a predetermined web page can be accessed through a network to transmit or receive data to or from the corresponding server.

Additionally, the network interface 133 can receive content or data provided by a content provider or network operator. That is, the network interface 133 can receive content such as movies, advertisements, games, VOD, broadcast signals, and the like, and information related thereto provided from a content provider or network provider through a network.

In addition, the network interface 133 can receive firmware update information and update files provided by the network operator, and can transmit data to the Internet or content provider or network operator.

The network interface 133 can select and receive a desired application from among applications open to the public through a network.

The external device interface 135 can receive an application or a list of applications within an adjacent external device and transmit it to the processor 170 or database 140.

The external device interface 135 can provide a connection path between the display device 100 and the external device. The external device interface 135 can receive one or more images and audio output from an external device connected to the display device 100 in a wireless or wired manner, and transmit them to the processor 170. The external device interface 135 can include a plurality of external input terminals. The plurality of external input terminals can include an RGB terminal, one or more high definition multimedia interface (HDMI) terminals, and a component terminal.

An image signal from an external device input through the external device interface 135 can be displayed through the display 180. The voice signal of the external device input through the external device interface 135 can be output through the audio output part 185.

The external device that can be connected to the external device interface 135 can be any one of a set-top box, a Blu-ray player, a DVD player, a game console, a sound bar, a smartphone, a PC, a USB memory, and a home theater, but this is only an example.

In addition, some of the content data stored in the display device 100 can be transmitted to a user or electronic device selected from among other users or other electronic devices pre-registered in the display device 100.

The database 140 can store programs for each signal processing and control within the processor 170, and store signal-processed image, voice, or data signals.

In addition, the database 140 can perform a function for temporary storage of image, video, or data signals input from the external device interface 135 or the network interface 133, and can store information on a predetermined image through a channel memory function.

The database 140 can store an application or a list of applications input from the external device interface 135 or the network interface 133.

The display device 100 can play content files (video files, still image files, music files, document files, application files, etc.) stored in the database 140 to provide them to a user.

The user input interface 150 can transmit a signal input by the user to the processor 170 or transmit a signal from the processor 170 to a user. For example, the user input interface 150 can receive and process control signals such as power on/off, channel selection, and screen setting from a remote control device 200 according to various communication methods such as Bluetooth, ultra wideband (UWB), ZigBee, radio frequency (RF) communication, or infrared (IR) communication, or process control signals from the processor 170 to be transmitted to the remote control device 200.

In addition, the user input interface 150 can transmit control signals input from local keys (not shown) such as a power key, a channel key, a volume key, and a setting key to the processor 170.

An image signal processed in the processor 170 can be input to the display 180 and displayed as an image corresponding to the corresponding image signal. In addition, the image signal processed in the processor 170 can be input to an external output device through the external device interface 135.

A voice signal processed in the processor 170 can be output as audio to the audio output part 185. In addition, the voice signal processed in the processor 170 can be input to an external output device through the external device interface 135.

Besides, the processor 170 can control an overall operation within the display device 100.

In addition, the processor 170 can control the display device 100 by a user command or internal program input through the user input interface 150. The processor 170 can access a network to allow an application or list of applications desired by a user to be downloaded into the display device 100. At least one application program can be configured to execute on the processor 170 to control the display device 100. A first application program 10 can be executed to receive a prompt for AI image generation and provide highlight keywords and a recommended keyword list. A second application program 20 can be executed to store and manage a prompt, a recommended keyword list associated therewith, and the like.

The processor 170 can allow channel information or the like selected by a user to be output through the display 180 or audio output part 185 along with the processed image or audio signal.

In addition, the processor 170 allows an image signal or voice signal from an external device, for example, a camera or camcorder, input through the external device interface 135 to be output through the display 180 or audio output part 185 according to an external device video playback command received through the user input interface 150.

Meanwhile, the processor 170 can control the display 180 to display an image, and for example, can control the display 180 to display a broadcast image input through the tuner part 131, an external input image input through the external device interface 135, an image input through the network interface 133, or an image stored in the database 140. In this case, the image displayed on the display 180 can be a still image or a moving image, and can be a 2D image or a 3D image.

In addition, the processor 170 can control the playback of content stored in the display device 100, received broadcast content, or external input content input from the outside, and the content can be in various forms such as broadcast images, external input images, audio files, still images, connected web screens, and document files.

The wireless communication part 173 can communicate with an external device through wired or wireless communication. The wireless communication part 173 can perform short range communication with an external device. To this end, the wireless communication part 173 can support short range communication by using at least one of BluetoothTM, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, Wireless Universal Serial Bus (Wireless USB), and the like. The wireless communication part 173 can support wireless communication between the display device 100 and the wireless communication system, between the display device 100 and another display device 100, or between the display device 100 and a network where the display device 100 (or an external server) is located through wireless area networks. One example of the wireless area networks can be a wireless personal area network.

Here, the other display device 100 can be a wearable device such as a smartwatch, smart glasses, a head mounted display (HMD) or a mobile terminal such as a smart phone that can exchange data with (or be linked to) the display device 100 according to the present disclosure. The wireless communication part 173 can detect (or recognize) a wearable device capable of communication around the display device 100. Furthermore, when the detected wearable device is an authenticated device to communicate with the display device 100 according to the present disclosure, the processor 170 can transmit at least a portion of data processed in the display device 100 to the wearable device through the wireless communication part 173. Therefore, a user of the wearable device can use data processed in the display device 100 through the wearable device.

The voice recognition processing module 175 can acquire audio. The voice recognition processing module 175 can include at least one microphone (not shown), and can acquire audio around the display device 100 through the microphone (not shown).

The display 180 can generate a drive signal by converting an image signal, data signal, OSD signal processed by the processor 170 or an image signal, data signal, or the like received from the external device interface 135 into R, G, B signals, respectively.

Meanwhile, since the display device 100 shown in FIG. 1 is only one embodiment of the present disclosure, some of the shown elements can be integrated, added, or omitted depending on the specifications of the display device 100 actually implemented.

That is, two or more elements can be combined into one element, or one element can be divided into two or more elements, as needed. In addition, a function performed in each block is to describe an embodiment of the present disclosure, and a detailed operation or device thereof does not limit the scope of the present disclosure.

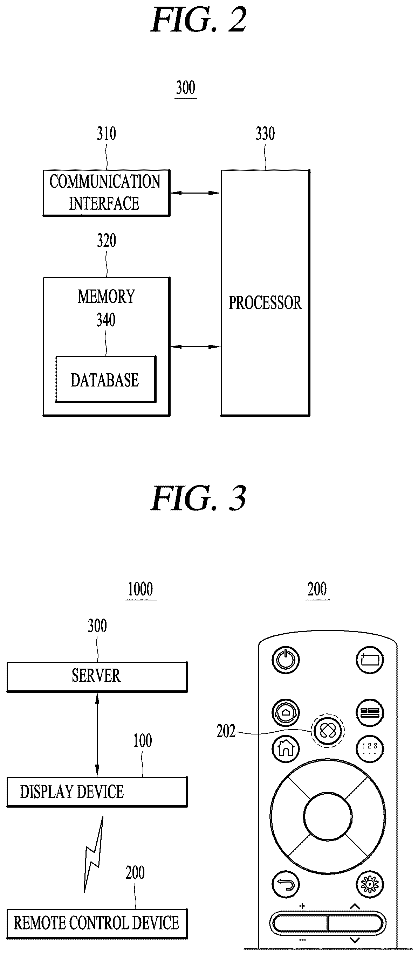

FIG. 2 is a diagram for explaining a generative AI server according to an embodiment of the present disclosure.

A generative AI server 300 can provide an AI image requested by a user who uses the display device 100. The server 300 can analyze a prompt entered by a user and provide a recommended keyword list associated therewith. The server 300 can provide AI images based on an input prompt.

The server 300 can include a communication interface 310, a memory 320, and a processor 330.

The server 300 can transmit and receive data through wired or wireless communication with at least one display device 100 through the communication interface 310.

The memory 320 can be configured to include a database 340 or be linked to a database 340. The database 340 can store information associated with AI image generation requested by each device. AI image generation information can be detailed information on an AI image previously requested and generated by a user. For example, it can be detailed information on an object and background included in the image, an image style, or an image quality. The database 340 can store AI image generation information in association with identification information on each device.

When receiving a recommended keyword request from the display device 100 or external device, the processor 330 can provide a recommended keyword list optimized for each device based on AI image generation information stored in the database 340. When receiving an AI image generation request from the display device 100 or external device, the processor 330 can generate an AI image based on a prompt included in the request and store the image in the database 340.

FIG. 3 is a diagram for explaining an AI system including a display device according to an embodiment of the present disclosure.

An AI system 1000 can include at least one display device 100, at least one remote control device 200, and a server 300. The server 300 can be a generative AI server.

The processor 170 of the display device 100 can generate a prompt for AI image generation. In this regard, the processor 170 can receive a key input of a specific button for executing an AI application in conjunction with the user input interface 150. Subsequently, the processor 170 can receive a voice input or text input for prompt writing. The processor 170 can generate a prompt corresponding to the received voice input or text input.

In addition, the processor 170 can generate a recommended keyword request and an image generation request including a prompt. The recommended keyword request can be a request for determining one or more highlight keywords in a prompt, and generating recommended keyword lists associated with the determined keywords. The image generation request can be an AI image generation request based on a prompt.

The processor 170 can transmit device identification information of the display device 100 and a recommended keyword request or image generation request to the server 300 through the network interface 133. The device identification information can be unique identification information used to distinguish one device from another.

The communication interface 310 of the server 300 can receive device identification information and a recommended keyword request or image generation request from the display device 100. The server 300 can store a recommended keyword request or image generation request received from the display device 100 in a database 321 associated with the device identification information.

Upon receiving a recommended keyword request, the processor 330 of the server 300 can acquire AI image generation information associated with the display device 100 from the database 321 based on the device identification information. The AI image generation information can be image information previously generated according to a user request. The processor 330 can determine highlight keywords within a prompt included in a recommended keyword request and generate a recommended keyword list associated therewith with reference to the AI image generation information. The recommended keyword list can include a recommended keyword list associated with an object, a recommended keyword list associated with a background, or a recommended keyword list associated with a style within the prompt.

The processor 330 can transmit one or more highlight keywords and recommended keyword lists associated therewith to the display device 100 through the communication interface 310.

The processor 170 of the display device 100 can receive one or more highlight keywords and recommended keyword lists from the server 300 through the network interface 133. The processor 170 can update a current prompt based on the received highlight keywords and recommended keyword list and display the updated prompt on a screen along with the recommended keyword list.

When one keyword is selected from the recommended keyword list displayed on the screen, the processor 170 can update the prompt to include the selected keyword. The processor 170 can make a request for a new recommended keyword associated with the updated prompt from the server 300. The processor 170 can transmit a recommended keyword request including the updated prompt to the server 300. In response to the recommended keyword request transmission, the processor 170 can receive an updated highlight keyword and an updated recommended keyword list. The updated highlight keyword and updated recommended keyword list can be based on the updated prompt.

Meanwhile, when receiving an image generation request from the display device 100, the processor 330 of the server 300 can acquire previous AI image generation information from the database 340 based on device identification information. The processor 330 can generate an AI image associated with a prompt included in an image generation request with reference to the acquired information.

The processor 330 can transmit a storage location of the generated AI image to the display device 100 through the communication interface 310.

The processor 170 of the display device 100 can receive the AI image storage location from the server 300 through the network interface 133. The processor 170 can download an image by requesting a separate external database where the image is stored based on the AI image storage location. The processor 170 can display the downloaded AI image on the display 180.

The present disclosure relates to a display device for providing recommended keywords. More specifically, the present disclosure relates to an AI system including a display device and a generative AI server for updating a prompt by providing keyword highlights and recommended keywords, and generating an AI image based on the prompt.

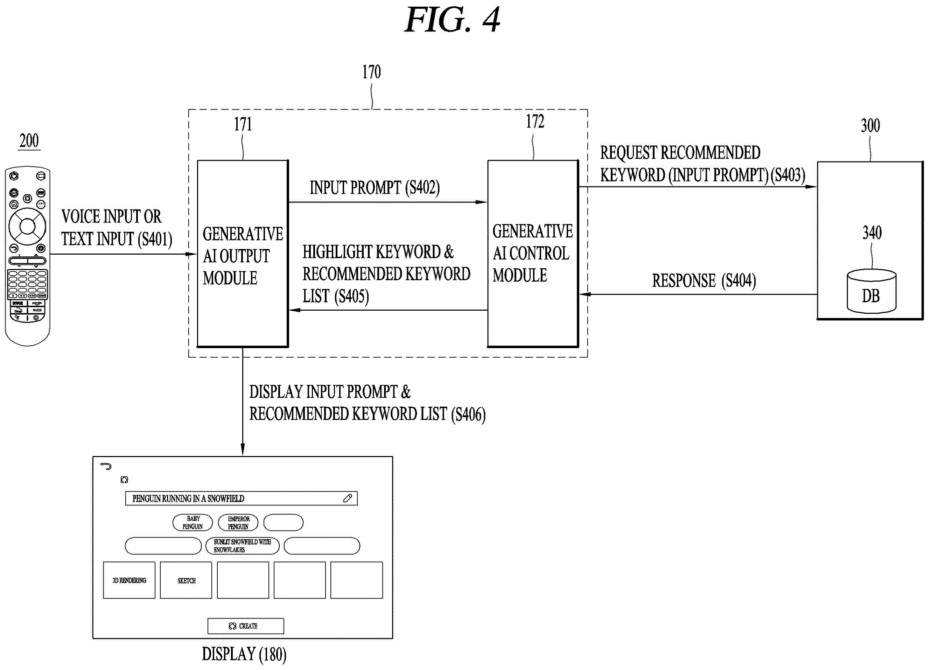

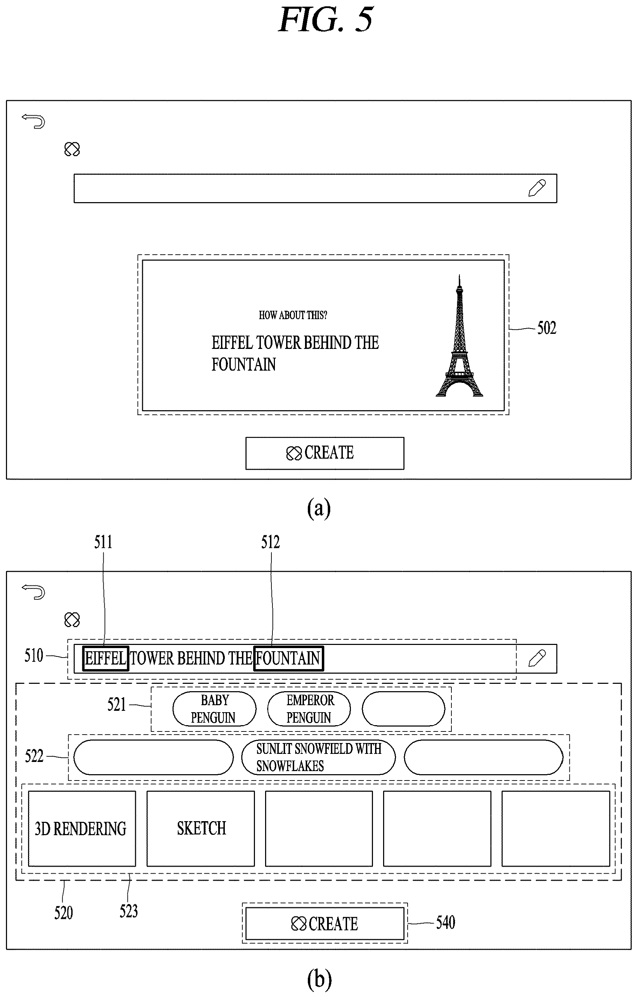

Hereinafter, a display device and an AI system including the same for updating a prompt by providing keyword highlights and recommended keywords according to the present disclosure will be described. In this regard, FIG. 4 shows an operational flow diagram between each module of a display device and a generative AI server for updating a prompt by displaying keyword highlights and providing recommended keywords according to the present disclosure. FIG. 5 shows an exemplary screen of a display device that updates a prompt by displaying keyword highlights and providing recommended keywords according to the present disclosure.

Referring to FIGS. 1 to 5, the display device 100 for highlighting one or more keywords and providing recommended keyword lists based on an input prompt according to the present disclosure will be described. The display device 100 can be configured to include a user input interface 150, a processor 170, and a display 180.

The user input interface 150 can be configured to receive a voice input or text input subsequent to a key input of a specific button on the remote control device 200. In this regard, the user input interface 150 can be configured to receive a key input associated with the execution of a generative AI application in conjunction with the remote control device 200. Subsequently, the user input interface 150 can be configured to receive a voice input or text input associated with AI image generation in conjunction with the remote control device 200. Hereinafter, an input associated with the execution of a generative AI application is referred to as a first input, and an input associated with the recognition of a voice input associated with the generation of an AI image is referred to as a second input.

The first input and the second input can correspond to inputs to specific buttons of the remote control device 200. For example, the first input and the second input can correspond to different types of inputs of an AI shortcut key 202 on the remote control device 200. The first input can correspond to a short press for a first time period less than a threshold time period of the AI shortcut key 202. The second input can correspond to a long press for a second time period longer than the threshold time period of the AI shortcut key 202. Following the first input, while the second input is applied, the user can provide a voice input associated with AI image generation. Alternatively, following the first input, a text input associated with AI image generation can be provided.

The display 180 can be configured to display an input prompt corresponding to a voice input or text input associated with AI image generation and a recommended keyword list based on the input prompt. In addition, the display 180 can be configured to display an AI image generated based on the input prompt on the screen.

The processor 170 can be configured to highlight at least one or more keywords in an input prompt and display recommended keyword lists associated with the highlighted keywords on the display 180. In this regard, highlighting a keyword can refer to displaying a specific keyword in an intensified manner within a prompt to distinguish it from other keywords. The processor 170 can highlight one or more keywords by utilizing visual elements such as text color, text font, text thickness, background color, or underline.

In this regard, the processor 170 can transmit a request for recommended keywords including an input prompt to the generative AI server 300. In response thereto, the processor 170 can receive one or more highlight keywords and recommended keyword lists from the server 300. The processor 170 can update the input prompt and the recommended keyword list based on the received highlight keywords. The processor 170 can control the updated input prompt and recommended keyword list to be displayed on the display 180. The input prompt displayed on the display 180 can have one or more keywords highlighted.

Meanwhile, the processor 170 can be configured to include a generative AI output module 171 and a generative AI control module 172. In this regard, the generative AI output module 171 can be implemented as a generative AI application. The generative AI output module 171 can be configured to execute a generative AI application and display an input prompt and a recommended keyword list on the display 180. The generative AI control module 172 can be configured to be linked to the generative AI server 300. The generative AI control module 172 can be configured to acquire at least one or more highlight keywords and recommended keyword lists based on an input prompt from the server 300.

The generative AI output module 171 can generate, in response to receiving a voice input or text input from the user input interface 150, a corresponding input prompt. The generative AI output module 171 can transmit the generated input prompt to the generative AI control module 171. The generative AI output module 171 can receive, in response to transmitting the input prompt, at least one or more highlight keywords and recommended keyword lists based on the input prompt from the generative AI control module 172.

The generative AI output module 171 can highlight parts associated with highlight keywords in the input prompt and recommended keyword list. The generative AI output module 171 can display the highlighted input prompt and recommended keyword list on the display 180.

The generative AI control module 172 can generate, in response to receiving an input prompt from the generative AI output module 171, a recommended keyword request including the input prompt. The generative AI control module 172 can transmit the recommended keyword request to the generative AI server 300. The request can determine at least one highlight keyword in the input prompt and make a request for generating a recommended keyword list associated with the determined highlight keyword. In response to transmitting a recommended keyword request, the generative AI control module 172 can receive at least one or more highlight keywords and recommended keyword lists from the server 300. The generative AI control module 172 can transmit one or more highlight keywords and recommended keyword lists to the generative AI output module 171.

Meanwhile, the one or more highlight keywords and recommended keyword lists can be keywords based on the input prompt. In this regard, the highlight keyword can be a first keyword associated with an object included in the input prompt. For example, when the input prompt is "draw an illustration of a penguin wearing a yellow vest happily running through a snowfield," the first keyword can be "a penguin wearing a yellow vest," which represents the object. The highlight keyword can be a second keyword associated with a background included in the input prompt. For example, the second keyword can be a "snowfield", which represents the background included in the input prompt. The highlight keyword can be a third keyword associated with an image style included in the input prompt. For example, the third keyword can be "illustration", which represent an image style included in the input prompt.

When the highlight keyword includes a plurality of highlight keywords, the plurality of highlight keywords can be respectively highlighted in different colors. In this connection, when the highlight keyword includes a first keyword and a second keyword, the first keyword and the second keyword can be respectively highlighted in a first color and a second color. For example, when the highlight keyword includes a "penguin wearing a yellow vest" and a "snowfield," the "penguin wearing a yellow vest" can be highlighted in blue, and the "snowfield" can be highlighted in light blue.

Meanwhile, the first keyword representing the object can include at least one of a keyword referring to the object and a keyword describing a feature of the object. For example, the first keyword can include a "penguin" referring to the object and a "yellow vest" describing a feature of the object. In this regard, the keyword referring to the object included in the first keyword and the keyword describing the object can be respectively highlighted in different colors. For example, when the first keyword is a "penguin wearing a yellow vest," the "penguin" can be highlighted in blue, and the "yellow vest" can be highlighted in yellow.

The recommended keyword list can include one or more recommended keywords associated with the highlight keyword. The recommended keyword list can include at least one of a recommended object keyword list associated with the first keyword, a recommended background keyword list associated with the second keyword, and a recommended style keyword list associated with the third keyword.

In this regard, the recommended keyword list can include one or more recommended keywords associated with the first keyword. For example, when the first keyword is a "penguin," the recommended keyword list can include a "baby penguin," an "emperor penguin," a "flock of penguins," and the like. The recommended keyword list can include a recommended background keyword list associated with the second keyword. For example, when the second keyword is a "snowfield," the recommended background keyword list can include a "snowfield with snowflakes flying," a "sunlit snowfield with snowflakes," a "snowfield with snowflakes under blue sky," and the like. The recommended keyword list can include one or more recommended style keywords associated with the third keyword. For example, when the third keyword is "illustration," the recommended style keyword list can include a "cartoon style," a "watercolor style," a "geometric style," and the like, which are associated with the "illustration" style. The recommended style keyword list can further include an associated image representing the corresponding image style along with the recommended style keyword.

A recommended style keyword list can be provided even when the input prompt does not include a third keyword associated with the style. For example, a recommended style keyword list representing common image styles such as "3D rendering", "sketch", "oil painting", "Van Gogh", and "cubism" can be provided. In this regard, the recommended style keyword list can be provided with reference to the user's previous AI image generation information. For example, image style information included in the user's previous AI image generation information can be referenced. The image style included in the AI image generation information can be image style information that the user has frequently used in the past to generate images.

In addition, the recommended keyword list can include at least one of a recommended object keyword list, a recommended background keyword list, and a recommended style keyword list associated with at least one of the first keyword, the second keyword, and the third keyword. For example, the highlight keyword can only include a keyword associated with the object. In this case, the recommended keyword list can include at least one of a recommended object keyword list, a recommended background keyword list, and a recommended style keyword list associated with the keyword associated with the object. For example, when the highlight keyword is a "penguin," the recommended keyword list can include a "baby penguin," an "emperor penguin," a "flock of penguins," and the like. The recommended background keyword list can include a "sunlit snowfield" and a "snow-covered hill", which are associated with the "penguin." The recommended style keyword list can include "illustration," "watercolor," and the like to match the "penguin".

Each list included in the recommended keyword list can be displayed in the same color as the highlight keyword associated therewith. In this regard, the recommended object keyword list can be displayed in a first color, which is the same color as the first keyword, and the recommended background keyword list can be displayed in a second color, which is the same color as the second keyword. For example, when the first keyword "penguin" is displayed in blue, a "baby penguin," an "emperor penguin," and a "flock of penguins" included in the recommended keyword list can also be displayed in blue.

When a specific button on the remote control device 200 is pressed, the generative AI output module 171 can be configured to execute a generative AI application so as to receive a voice input or text input for AI image generation.

In this regard, a specific button on the remote control device 200 can correspond to the AI shortcut key 202 of FIG. 3. When the AI shortcut key is pressed for a first time period less than the threshold time period, the processor 170 can recognize it as a first input of a short press. The processor 170 can perform an AI concierge mode that generates an AI image in response to a first input. When a first input is applied to the AI shortcut key 202 on the remote control device 200, an execution input can be transmitted from the remote control device 200 to the generative AI output module 171. The generative AI output module 171 can execute a generative AI application and receive a user input for AI image generation. For example, an AI image generation guide screen in (a) of FIG. 5 can be displayed on the display 180. In this regard, a sentence for guiding a method of writing a prompt can be displayed for the user. For example, a guidance sentence such as "say what you want to draw while holding down an AI button" can be displayed in one area of the display 180. In addition, an example of writing a prompt 502 can be displayed.

Following the first input, when the AI shortcut key is pressed for a second time period longer than the threshold time period, the processor 170 can recognize it as a second input of long press and hold. The processor 170 can perform an AI voice recognition mode that recognizes the user's utterance data (voice data) in response to the second input. While the second input is applied, the user can provide a voice input associated with AI image generation. Alternatively, a text input associated with AI image generation can be provided by using buttons on the remote control device 200. A voice input or text input can be transmitted from the remote control device 200 to the generative AI output module 171 (S401).

The generative AI output module 171 can generate, when receiving a voice input or text input from the user input interface 150, a corresponding input prompt. For example, the input prompt can be "a penguin running in a snowfield." The generated input prompt can be transmitted to the generative AI control module 172 (S402).

The generative AI control module 172 can generate, when receiving the input prompt, a recommended keyword request. The recommended keyword request can include the input prompt. The generative AI control module 172 can transmit the recommended keyword request to the generative AI server 300 (S403). The request can be a request to determine at least one or more highlight keywords in the input prompt and generate recommended keyword lists associated with the determined highlight keywords. For example, in the context of a "penguin running in a snowfield", the request can be a request to determine one or more highlight keywords and generate recommended keyword lists associated with the highlight keywords.

In response to transmitting a recommended keyword request, the generative AI control module 172 can receive a response from the server 300 (S404). The response can include at least one or more highlight keywords and recommended keyword lists based on the input prompt. For example, the highlight keyword can include a "penguin" associated with the object and a "snowfield" associated with the background. In addition, the recommended keyword list can include a recommended object keyword list including keywords such as a "baby penguin" and an "emperor penguin" that are associated with the "penguin". The recommended keyword list can include a recommended background keyword list including keywords such as a "snowfield" and a "sunlit snowfield with snowflakes." The recommended keyword list can further include a recommended style keyword list including keywords such as "3D rendering", "sketch", and the like. The recommended style keyword list may include an image representing the corresponding style along with the recommended style keyword as a pair with the keyword.

The generative AI control module 172 can transmit one or more highlight keywords and recommended keyword lists acquired from the server 300 to the generative AI output module 171 (S405). The generative AI output module 171 can receive one or more highlight keywords and recommended keyword lists from the generative AI control module 172. The one or more highlighted keywords and recommended keyword lists can be associated with the input prompt.

The generative AI output module 171 can analyze the highlight keywords. Based on an analysis result, the generative AI output module 171 can update a current input prompt and a recommended keyword list acquired from the server 300. The generative AI output module 172 can highlight parts associated with highlight keywords in the input prompt and recommended keyword list.

In this regard, the highlight keyword can include a plurality of highlight keywords. In this case, each keyword corresponding to highlight in the input prompt can be highlighted in a different color. For example, when the highlight keyword includes a "penguin" and a "snowfield," the "penguin" within the input prompt can be highlighted in red and the "snowfield" can be highlighted in blue. Recommended keywords included in the recommended keyword list can also be highlighted in the same color as the highlight keyword associated therewith. For example, a "baby penguin" and an "emperor penguin," associated with a "penguin" in the recommended keyword list can be highlighted in the same color, red, as that of the "penguin." A "sunlit snowfield with snowflakes" or the like associated with a "sunlit snowfield with snowflakes" included in the recommended keyword list can be highlighted in the same color, blue, as that of the "sunlit snowfield with snowflakes."

Meanwhile, a keyword associated with an image style can or can not be included in the input prompt. When the input prompt includes a keyword associated with the image style, a recommended style keyword list can include a recommended style keyword associated with the corresponding keyword. When the input prompt does not include a keyword associated with the style, a recommended style keyword list representing common image styles can be provided. The recommended style keyword list can further include an associated image representing the corresponding image style along with the recommended style keyword.

The AI output module 171 can display a highlighted input prompt and a recommended keyword list on the display 180 (S406). In the input prompt displayed on the screen, one or more keywords can be respectively highlighted in different colors. The respective lists in the recommended keyword list displayed on the screen can be displayed in the same color as that of a keyword associated therewith within the prompt.

As shown in (b) of FIG. 5, a prompt input window including an input prompt 510 can be displayed in a first area, and a recommended keyword list 520 can be displayed in a second area. A keyword 511 corresponding to a first keyword associated with an object and a keyword 512 corresponding to a second keyword associated with a background can be highlighted in the input prompt 510 displayed in the first area. The respective keywords 511, 512 can be highlighted in different colors. The respective keywords 511, 512 can be highlighted in a first color and a second color.

The recommended keyword list 520 displayed in the second area can include recommended keyword lists 521, 522 associated with at least one of the first and second keywords. The recommended keyword list 520 can include a recommended object keyword list 521 associated with the first keyword and a recommended background keyword list 522 associated with the second keyword. The recommended keyword lists 521, 522 can be respectively displayed in the same color as that of highlighted keywords 511, 512 associated therewith. For example, the recommended object keyword list 521 and the recommended background keyword list 522 can be displayed in a first color and a second color, respectively.

The recommended style keyword list 523 can include pairs of recommended style keywords and images representing the corresponding styles. For example, the keyword "3D rendering" can also be displayed over an image representing "3D rendering." The recommended style keyword list can include recommended style keywords associated with the first keyword or recommended style keywords associated with the second keyword. The recommended style keyword list may not be associated with keywords within the input prompt.

The recommended keyword lists 521, 522, 523 can be respectively displayed in different areas on the display. The recommended keyword lists 521, 522, 523 can be respectively placed on different shelves or different rows on the display to be displayed separately. The recommended keyword lists 521, 522, 523 can be placed in different rows in an area between an input prompt 510 and an options menu 540 by category.

For example, the recommended object list 521 can be placed in a first row between the input prompt 510 and the options menu 540. The recommended background keyword list 522 can be placed in a second row between the input prompt 510 and the options menu 540. The recommended style keyword list 523 can be placed in a third row between the input prompt 510 and the options menu 540.

In addition, the recommended keyword lists 521, 522, 523 can respectively be displayed in different user interface elements, for example, card-shaped interfaces, tabs, chips, or partitioned sub-regions, on the display. This configuration allows respective recommended keyword lists to be visually distinguished, and allows a user to more efficiently recognize and select a plurality of recommended keyword lists.

Meanwhile, a method for modifying the input prompt 510 displayed on the prompt input window can be guided. For example, the sentence "speak again while holding down an AI button or pressing an input window to edit" can be displayed on the display 180. In addition, an options menu (e.g., create) 540 for creating an AI image based on the input prompt 510 can be displayed.

Therefore, a display device for highlighting one or more keywords and providing a recommended keyword list based on an input prompt according to the present disclosure can be referred to as a display device that performs an AI function. In order to generate various AI images based on a user input prompt, the display device can highlight one or more keywords within the input prompt and provide recommended keywords associated therewith.

Meanwhile, the display device according to the present disclosure can be configured to modify an input prompt or select one keyword from a recommended keyword list. A display device according to the present disclosure is configured to update an input prompt and a recommended keyword list when one recommended keyword is selected from a recommended keyword list.

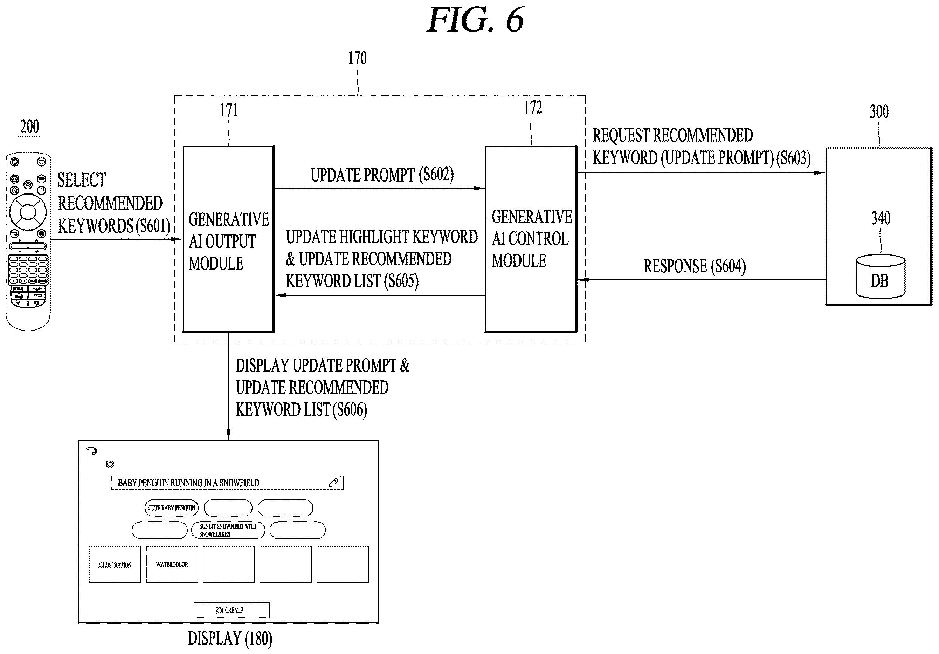

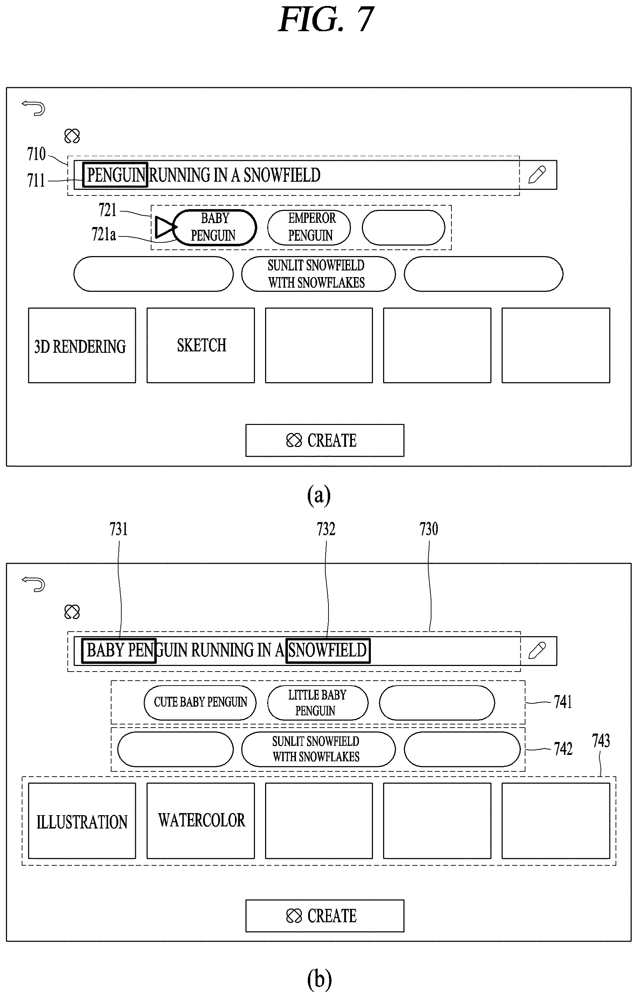

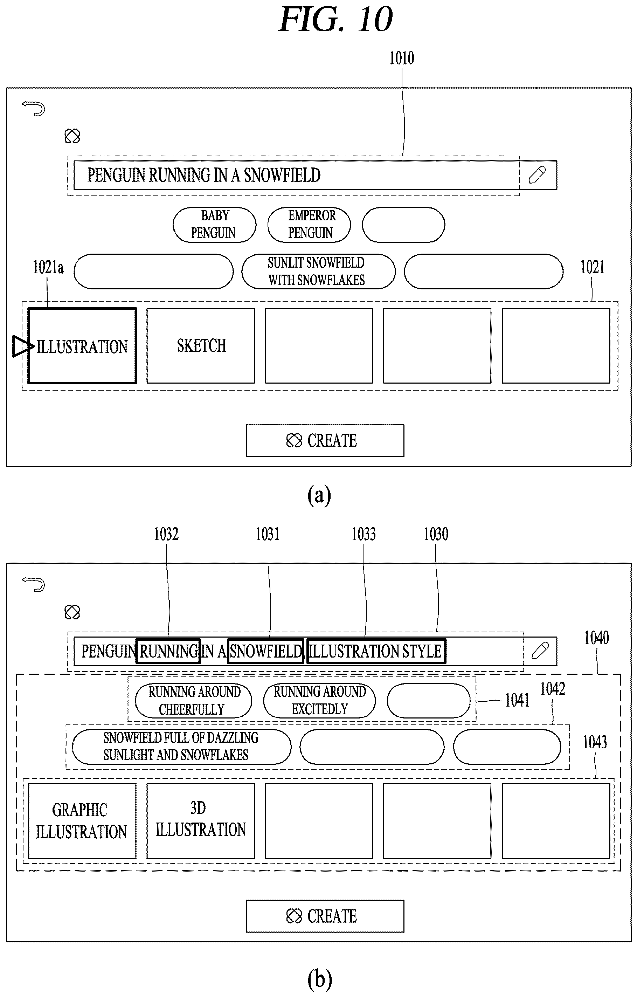

In this regard, FIG. 6 shows an operational flow diagram between each module of a display device and a generative AI server for updating a prompt and a recommended keyword list by selecting one of recommended keyword lists according to the present disclosure. FIGS. 7 to 9 show exemplary screens of a display device for updating a prompt and a recommended keyword list by selecting a recommended keyword associated with an object or background according to the present disclosure. FIG. 10 shows an exemplary screen of a display device for updating an input prompt and a recommended keyword list by selecting one of recommended style keyword lists according to the present disclosure.

Referring to FIGS. 1 to 10, the display device 100 of updating a prompt and a recommended keyword list by selecting one of recommended keyword lists according to the present disclosure will be described.

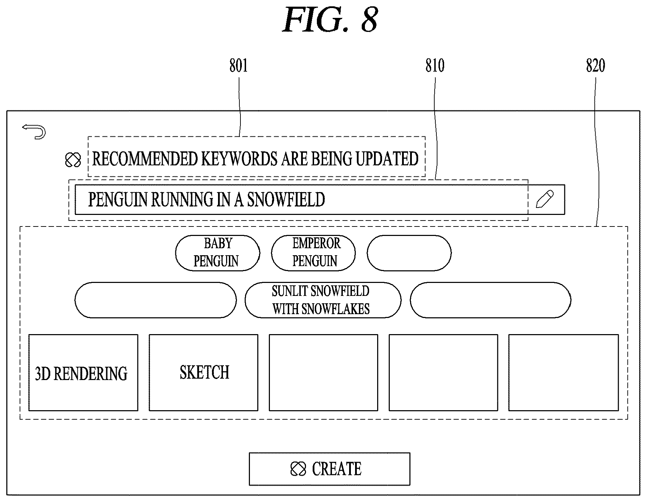

The generative AI output module 171 can update, in response to one recommended keyword being selected from the recommended keyword list, an input prompt with an update prompt. When one recommended keyword is selected from the recommended object keyword list or recommended background keyword list, the generative AI output module 171 can replace a keyword corresponding to the recommended keyword selected in the input prompt with the selected recommended keyword. In addition, the generative AI output module 171 can append, when one of the recommended style keywords is selected from the recommended style keyword list, the selected style keyword after the input prompt. The generative AI output module 171 can display the update prompt on the display 180. Here, the update prompt can be a prompt 810 displayed on a prompt input window of FIG. 8.

In this regard, each component of the display device 100 can be linked to the remote control device 200 and the generative AI server 300. One recommended keyword from the recommended keyword list can be selected through a key input or voice input into the remote control device 200. The selected recommended keyword can be transmitted to the generative AI output module 171 (S601).

The generative AI output module 171 can update the input prompt with the update prompt to include the selected recommended keyword. When one recommended keyword is selected from the recommended object keyword list or recommended background keyword list, a keyword corresponding to the selected recommended keyword in the input prompt can be replaced with the selected recommended keyword. When one style keyword is selected from the recommended style keyword list, the selected style keyword can be appended after the input prompt.

For example, in (a) of FIG. 7, one recommended keyword 721a can be selected from a recommended keyword list 721. The generative AI output module 171 can replace a keyword 711 corresponding to the recommended keyword 721a selected in the input prompt 710 with the selected recommended keyword 721a. For example, in a "penguin running in a snowfield" 710, the "penguin" 711 can be replaced with a "baby penguin" 721a. The "penguin running in a snowfield" 710 can be updated to a "baby penguin running in a snowfield" 810.

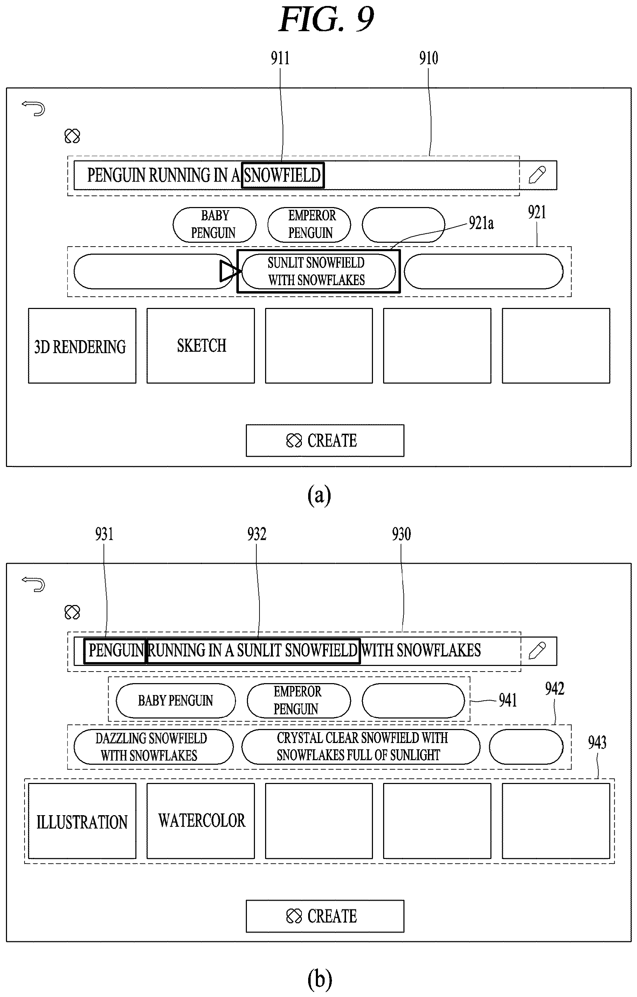

As another example, one recommended keyword 921a can be selected from a recommended background keyword list 921 in (a) of FIG. 9. The generative AI output module 171 can replace a keyword 911 corresponding to the recommended keyword 921a selected in the input prompt 910 with the selected recommended keyword 921a. For example, a "snowfield" 911 can be replaced with a "sunlit snowfield with snowflakes" 921a. A "penguin running in a snowfield" 910 can be updated to a "penguin running in a sunlit snowfield with snowflakes."

The generative AI output module 171 can transmit an update prompt to the generative AI control module 172 (S602). Upon receiving the update prompt from the generative AI output module 171, the generative AI control module 172 can generate a new recommended keyword request including the update prompt. The generative AI control module 172 can transmit a new recommended keyword request to the server 300 (S603). The request can be a request to determine at least one or more highlight keywords in the update prompt and generate recommended keyword lists associated with the determined highlight keywords.

In response to transmitting a new recommended keyword request, the generative AI control module 172 can receive a response from the server 300 (S604). The response can include at least one or more update highlight keywords and update recommended keyword lists based on the update prompt. The generative AI control module 172 can transmit one or more update highlight keywords and update recommended keyword lists to the generative AI output module 171 (S605).

The generative AI output module 171 can receive one or more update highlight keywords and update recommended keyword lists from the generative AI control module 172. The generative AI output module 171 can analyze the update highlight keywords. Based on an analysis result, the generative AI output module 172 can highlight parts associated with update highlight keywords in the update prompt and update recommended keyword list.

For example, in response to the selection of a "baby penguin" 721a in (a) of FIG. 7, the generative AI output module 171 can receive update highlight keywords and an update recommended keyword list from the generative AI control module 172. In this regard, the update highlight keywords can include a first keyword ("baby penguin") and a second keyword ("snowfield"). In a prompt 730 displayed on the prompt input window in (b) of FIG. 7, a "baby penguin" 731 and a "snowfield" 732 corresponding to the first and second keywords can be respectively highlighted in different colors.

In addition, the update recommended keyword list can include at least one of an update recommended object keyword list, an update recommended background keyword list, and an update recommended style keyword list. In this regard, the respective lists included in the update recommended keyword list can be associated with at least one of the first keyword and the second keyword. The respective lists included in the update recommended keyword list can be displayed in the same color as that of a keyword associated therewith on the display 180. For example, in (b) of FIG. 7, an update recommended object keyword list 741 and an update recommended style keyword list 743 can include one or more recommended keywords associated with the first keyword. An update recommended object style keyword 742 can include one or more recommended keywords associated with the second keyword. In this regard, the update recommended object keyword list 741 can include keywords such as a "cute baby penguin" and a "little baby penguin" associated with the "baby penguin" 731. The update recommended style keyword list 743 can include keywords such as "illustration" and "watercolor" associated with "baby penguin" 731. The update recommended object keyword list 741 and the update recommended style keyword list 743 can be displayed in the same color as the "baby penguin" 731.

Meanwhile, the generative AI output module 171 can transmit an update prompt to the generative AI control module 172, and display a sentence indicating that a recommended keyword list is being updated while waiting for a response on the display. For example, as shown in FIG. 8, a guidance sentence such as "recommended keywords are being updated" 801 can be displayed on the display 180. An update prompt 810 including the selected recommended keyword 721a can be displayed on an input prompt window. A "penguin" can be replaced with a "baby penguin", so as to allow "a baby penguin happily running through a snowfield with snowflakes falling" to be displayed on the screen. A recommended keyword list 820 displayed on the screen at this time can be a recommended keyword list before receiving a response from the server.

In addition, in an example of (a) of FIG. 9, a "sunlit snowfield with snowflakes" 921a can be selected. In response, the generative AI output module 171 can receive the first keyword ("penguin") and the second keyword ("a sunlit snowfield with snowflakes") as update highlight keywords. In this case, a prompt 930 displayed on the prompt input window in (b) of FIG. 9, a "penguin" 931 and a "sunlit snowfield with snowflakes" 932 can be respectively highlighted in different colors.

In addition, the generative AI output module 171 can receive an update recommended keyword list associated with the update highlight keywords. The generative AI output module 171 can display the respective lists included in the update recommended keyword list in the same color as a keyword associated therewith. In (b) of FIG. 9, an update recommended object keyword list 941 associated with the "penguin" 931 can be displayed on the display 180. The update recommended object keyword list 941 can be displayed in the same color as that of the "penguin" 931. An update recommended background keyword list 942 and a recommended style keyword list 943 associated with the "sunlit snowfield with snowflakes" 932 can be displayed on the display 180. The update recommended background keyword list 942 and the recommended style keyword list 943 can be displayed in the same color as that of the "sunlit snowfield with snowflakes" 932.

Meanwhile, in (a) of FIG. 10, one recommended keyword 1021a can be selected from the recommended style keyword list 1021. The generative AI output module 171 can append the selected style keyword 1021a after the input prompt 1010. For example, a "penguin running in a snowfield" 1010 can be updated to a "penguin running in a snowfield, an illustration style".

In an example of (a) of FIG. 10, in response to the selection of "Illustration" 1021a, the generative AI output module 171 can receive update highlight keywords and an update recommended keyword list from the generative AI control module 172. The update highlight keywords can include "snowfield," "running," and "illustration style." Here, the keyword "running" can be a keyword describing a behavior of the object. In a prompt 1030 displayed on the prompt input window in (b) of FIG. 10, the respective corresponding keywords 1031, 1032, 1033 can be highlighted in different colors.

In addition, the recommended update keyword list can include recommended keywords associated with the update highlight keywords. The update recommended keyword list can include a recommended keyword list associated with highlight keywords describing a behavior of the object. In (b) of FIG. 10, an update recommended keyword list 1040 can include a recommended keyword list 1041 associated with the behavior of the object including keywords such as "running around cheerfully" and "running around excitedly." The update recommended keyword list 1040 can include an update recommended style keyword list 1043 including keywords such as "graphic illustration" and "3D illustration" associated with "illustration style". In addition, the update recommended keyword list 1040 can include an update recommended background keyword list 1042 including keywords such as a "snowfield full of dazzling sunlight and snowflakes" associated with an "illustration style."

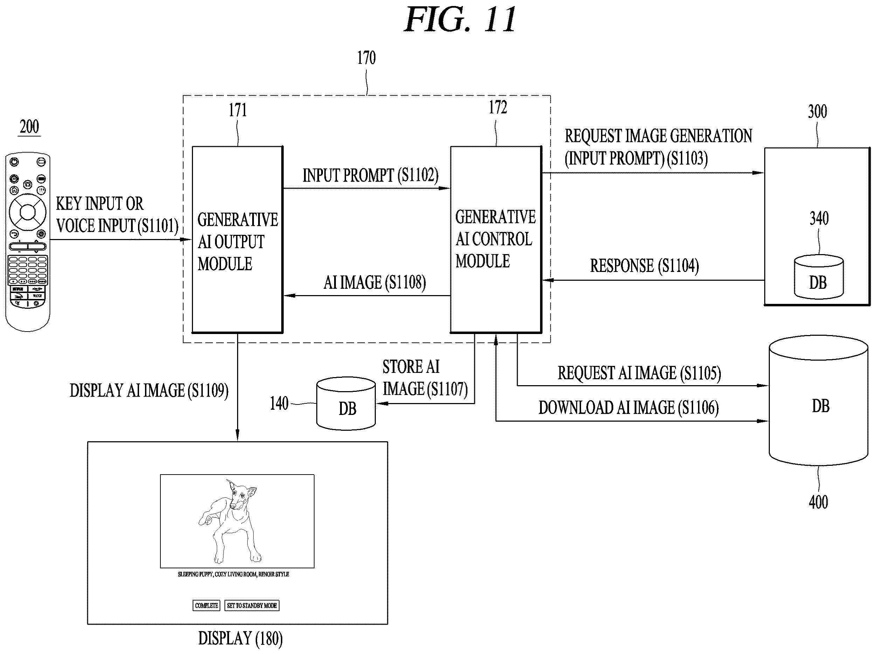

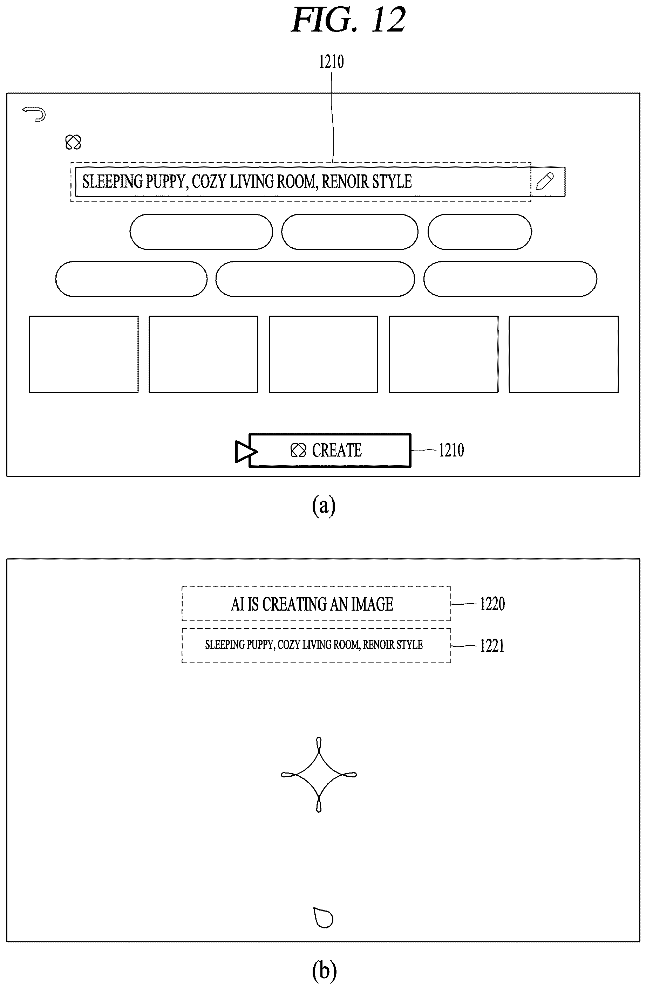

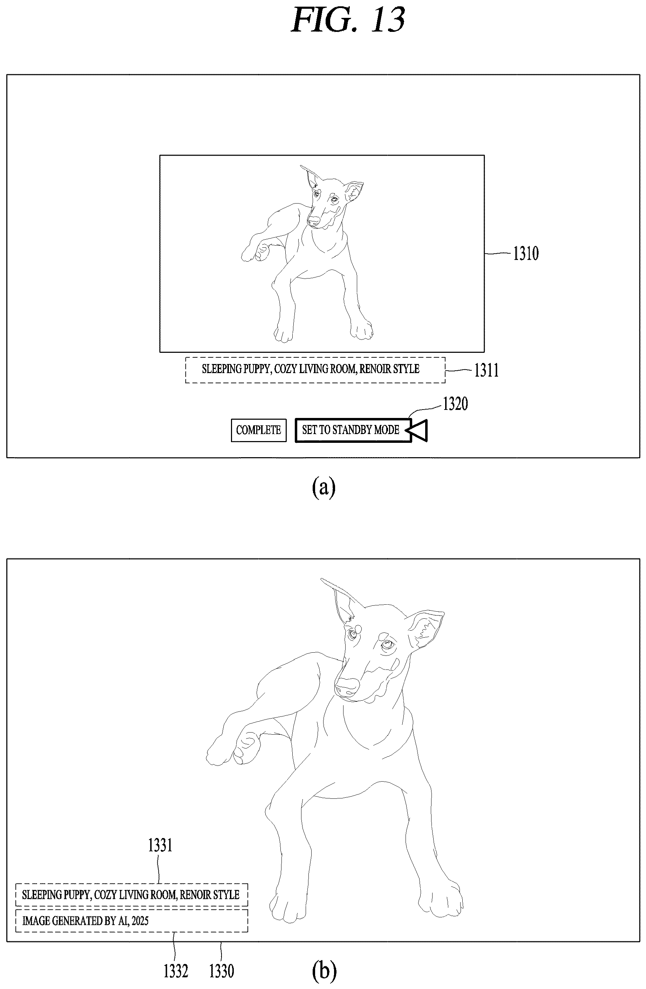

Meanwhile, a display device according to the present disclosure can be configured to generate an AI image based on an input prompt and set the generated AI image as a standby screen of the display. In this regard, FIG. 11 shows an operational flow diagram between each module of a display device and a server for generating an AI image based on a prompt and setting it as a display standby screen according to the present disclosure. FIGS. 12 and 13 show exemplary screens of a display device for generating an AI image based on a prompt and setting it as a display standby screen according to the present disclosure.

Referring to FIGS. 1 to 13, the display device 100 for generating an AI image based on an input prompt and setting the generated image as a standby screen according to the present disclosure will be described. In this regard, each component of the display device 100 can be linked to the remote control device 200 and the generative AI server 300.

The generative AI output module 171 can receive a key input or voice input into the remote control device 200 associated with an image generation request (S1101). In response thereto, the generative AI output module 171 can transmit an input prompt to the generative AI control module 172 (S1102). The generative AI control module 172 can generate an image generation request including the input prompt. The generative AI control module 172 can transmit an image generation request to the generative AI server 300 (S1103). The request can be a request to generate an AI image based on the input prompt.

For example, a key value corresponding to a "create" button 1210 in (a) of FIG. 12 can be entered. In response thereto, the generative AI control module 172 can receive a prompt 1210 displayed on a current prompt input window from the generative AI output module 171. The generative AI control module 172 can transmit an image generation request including the prompt 1210 to the generative AI server 300. The request can be a request to generate an AI image based on "sleeping dog, cozy, living room, Renoir style" 1210.

In response to transmitting a request to the server 300, the generative AI control module 172 can receive a response including a storage location of the generated AI image from the server 300 (S1104). In this regard, the image storage location can be index-based. For example, the image storage location can include an image identifier, an address of a separate external database 400 where the image is stored, and an image storage path. The generative AI control module 172 can access the database 400 based on the AI image storage location. The generative AI control module 172 can request an image from the database 400 (S1105) to download the image (S1106).

The generative AI control module 172 can store the downloaded AI image in the database 140 of the display device 100 (S1107). In addition, the generative AI control module 172 can transmit the downloaded AI image to the generative AI output module 171 (S1108). The generative AI output module 171 can display the received AI image 1310 on the display 180 (S1109).

For example, as shown in (a) of FIG. 13, the AI image 1310 based on the input prompt 1210 can be displayed on the display 180. A prompt 1311 corresponding to the generated AI image can be displayed along with the AI image 1310.

Meanwhile, while waiting for a response to AI image generation from the generative AI server 300, the generative AI output module 171 can display a sentence indicating that an AI image is being generated on the display 180. For example, as shown in (b) of FIG. 12, the sentence "AI is creating an image" 1220 can be displayed on the display 180. Along with the notification sentence 1220, AI image information 1221 currently being generated can be further displayed on the display 180.

While the generated AI image is displayed on the display 180, a key input or voice input into the remote control device 200 associated with a request to set a standby mode can be received. For example, a key value corresponding to a "set to standby mode" button 1320 in (a) of FIG. 13 can be entered. In response thereto, the generative AI control module 172 can set the AI image 1310 currently displayed on the display 180 as a standby screen of the display 180 so as to be displayed on the screen. For example, as shown in (b) of FIG. 13, an AI image 1330 based on an input prompt can be displayed as a standby mode screen. A prompt corresponding to the AI image, "sleeping puppy, cozy living room, Renoir style" 1331 can be displayed on the standby mode screen along with the AI image 1330. Image generation information 1332, such as an AI image generation date, can be displayed together with the AI image 1330.

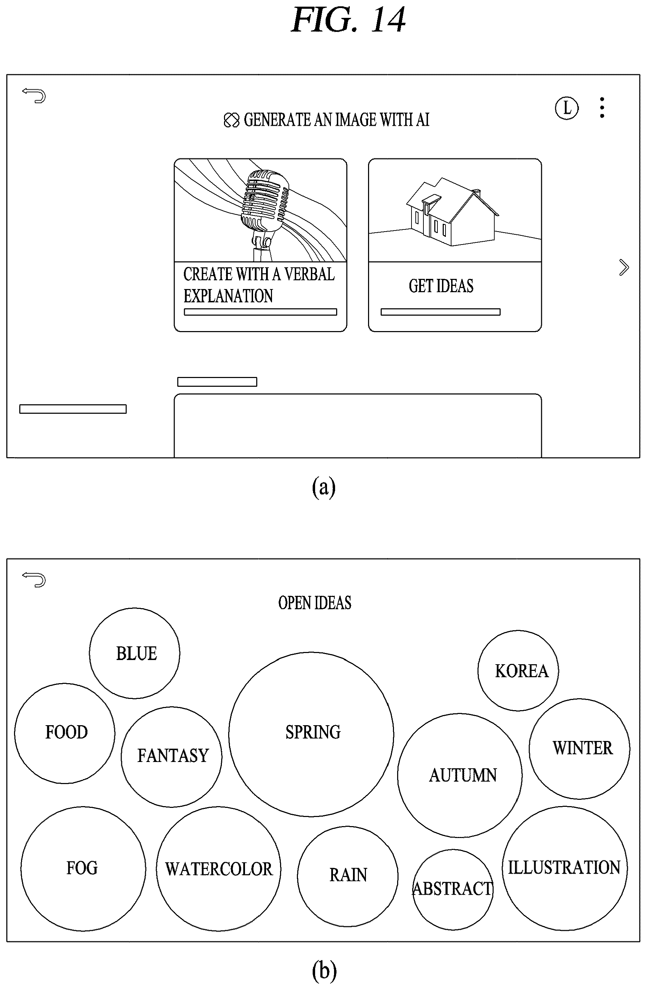

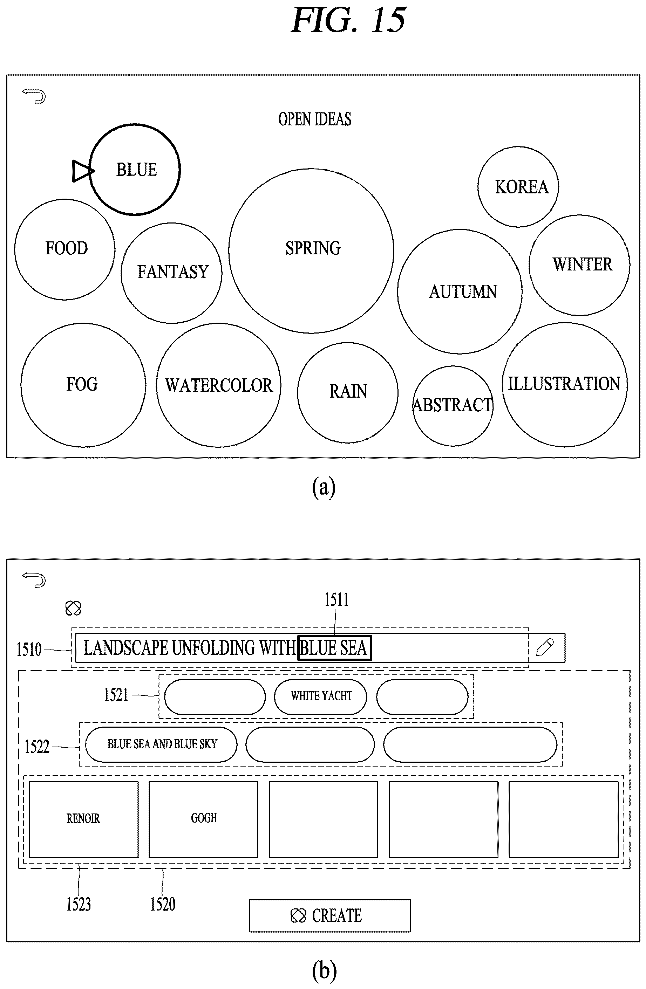

Meanwhile, a display device according to the present disclosure can operate in a first generative AI execution mode or a second generative AI execution mode. The first generative AI execution mode refers to an execution mode that generates an AI image by receiving a prompt input from a user. The second generative AI execution mode refers to an execution mode that receives an idea for image generation, and generates a random prompt based thereon to generate an image. In this regard, FIGS. 14 and 15 show exemplary screens of a display device for providing an idea acquisition screen for AI image generation according to the present disclosure.

Referring to FIGS. 1 to 15, the display device 100 operating in a first generative AI execution mode or a second generative AI execution mode according to the present disclosure will be described. In this regard, each component of the display device 100 can be linked to the remote control device 200 and the generative AI server 300.

The first generative AI execution mode can be triggered in response to a key input or voice input into a remote control device associated with the first generative AI execution mode. When the first generative AI execution mode is triggered, the generative AI output module 171 can display an AI image generation guide screen on the display 180. The AI image generation guide screen can include a prompt input window configured to receive a prompt from a user. The first generative AI execution mode can be triggered in response to a key input or voice input into a remote control device associated with the second generative AI execution mode. When the second generative AI execution mode is triggered, the generative AI output module 171 can display an AI image generation idea acquisition screen on the display 180. The AI image generation idea acquisition screen can include one or more recommended words for AI image generation.

For example, in response to a short press of the AI shortcut key 202 on the remote control device 200, an initial execution screen of an AI application shown in (a) of FIG. 14 can be displayed on the display 180. Subsequently, when a key input corresponding to a "create with a verbal explanation" button is received, the first generative AI execution mode can be triggered. In response to the first generation AI execution mode being triggered, the AI image generation guide screen shown in (a) of FIG. 5 can be displayed on the display 180. When the AI image generation guide screen is displayed, the user can provide a voice input for prompt writing while holding down the AI shortcut key 202.

When a key input corresponding to a "get ideas" button in (a) of FIG. 14 is received, the second generative AI execution mode can be triggered. In response to the second generative AI execution mode being triggered, the AI image generation idea acquisition screen shown in (b) of FIG. 14 can be displayed on the display 180. The AI image generation idea acquisition screen can include one or more random recommended words, such as "blue", "food", "fantasy", "fog", and the like.

In response to one word being selected from among one or more recommended words, the generative AI output module 171 can generate a random prompt including the selected word. For example, in response to the selection of "blue" in (a) of FIG. 15, the random prompt a "landscape unfolding with blue sea" can be generated. The generative AI output module 171 can transmit a random prompt to the generative AI control module 172.

The generative AI control module 172 can generate, in response to receiving a random prompt from the generative AI output module 171, a recommended keyword request including the random prompt. The generative AI control module 172 can transmit the recommended keyword request to the generative AI server 300. The request can determine at least one highlight keyword in the random prompt and make a request for generating a recommended keyword list associated with the determined highlight keyword. In response to transmitting a recommended keyword request, the generative AI control module 172 can receive at least one or more highlight keywords and recommended keyword lists from the server 300. The generative AI control module 172 can transmit one or more highlight keywords and recommended keyword lists to the generative AI output module 171.

The generative AI output module 171 can receive at least one or more highlight keywords and recommended keyword lists based on a random prompt from the generative AI control module 172. For example, the generative AI output module 171 can receive the highlight keyword "blue sea." The generative AI output module 171 can further receive a recommended keyword list associated with "blue sea." The generative AI output module 171 can highlight parts associated with highlight keywords in the random prompt and recommended keyword list. The generative AI output module 171 can display the highlighted random prompt and recommended keyword list on the display 180.

As shown in (b) of FIG. 15, a prompt input window including an input prompt 1510 can be displayed in a first area, and a recommended keyword list 1520 can be displayed in a second area. The input prompt 1510 displayed in the first area can highlight a keyword 1511 corresponding to the highlight keyword "blue sea." The recommended keyword list 1520 displayed in the second area can include at least one or more recommended keyword lists 1521, 1522, 1523 associated with the highlighted keyword 1511. The recommended keyword list 1520 can include a recommended object keyword list 1521 including keywords such as a "white yacht" associated with "blue sea" 1511. The recommended keyword list 1520 can include a recommended background keyword list 1522 including keywords such as "blue sea and blue sky" associated with "blue sea" 1511. The recommended keyword list 1520 can further include a recommended style keyword list 1523 including keywords such as "Renoir" and "Van Gogh" associated with "blue sea" 1511.

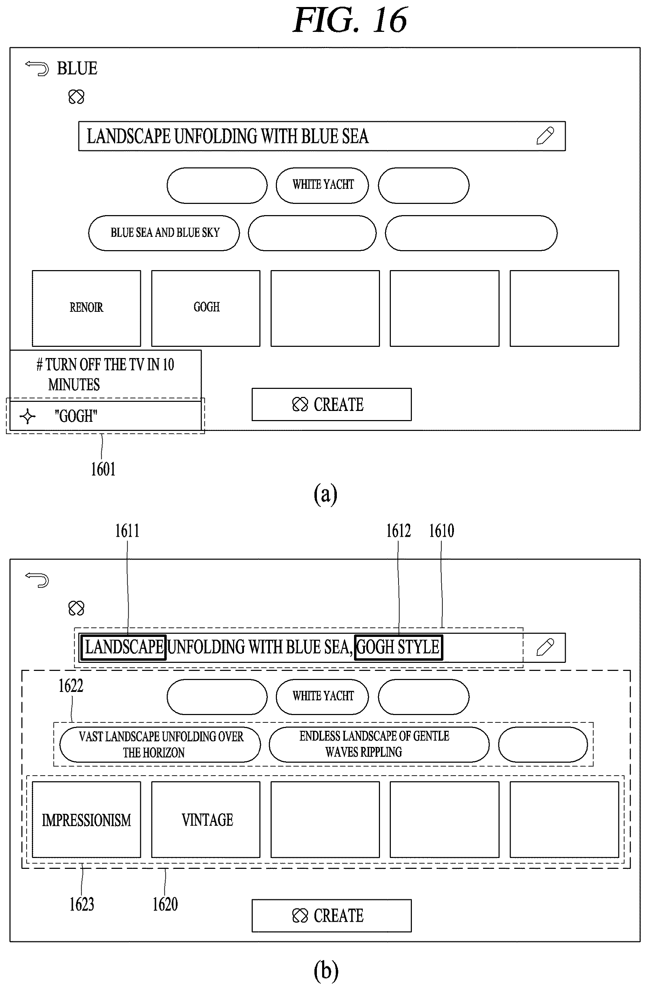

Meanwhile, a display device according to the present disclosure can be configured to receive a user utterance and select one of recommended keyword lists. In this regard, FIG. 16 shows an exemplary screen of a display device for updating a prompt and a recommended keyword list by selecting one of recommended keyword lists by a user utterance according to the present disclosure.

Referring to FIGS. 1 to 16, the display device 100 of updating a prompt and a recommended keyword list by selecting one of recommended keyword lists through a user utterance according to the present disclosure will be described. In this regard, each component of the display device 100 can be linked to the remote control device 200 and the generative AI server 300.

A user can input a user utterance to select one recommended keyword from a recommended keyword list.

For example, in (b) of FIG. 15, the user can utter "Van Gogh." In response thereto, the generative AI output module 171 can display "Gogh" 1601 corresponding to a user's utterance in one area of the display 180, as shown in (a) of FIG. 16. The generative AI output module 171 can update an input prompt by replacing a keyword corresponding to a recommended keyword selected in the input prompt with the selected recommended keyword. The generative AI output module 171 can transmit an update input prompt to the generative AI control module 172, and in response thereto, receive one or more update highlight keywords and update recommended keyword lists. The generative AI output module 171 can highlight parts associated with update highlight keywords in the update prompt and update recommended keyword list.

In (b) of FIG. 16, a prompt 1610 associated with update highlight keywords can be displayed on the display 180. In the prompt, keywords 1611, 1612 corresponding to the update highlight keywords can be respectively highlighted. A recommended keyword list 1620 associated with the update highlight keyword can be further displayed on the display 180. In the recommended keyword list 1620, a recommended background keyword list 1622 can be associated with the highlight keyword, an "unfolding landscape" 1611. The recommended background keyword list 1622 can be displayed in the same color as that of the "unfolding landscape" 1611. A recommended style keyword list 1623 can be associated with a highlight keyword, "Van Gogh style" 1612. The recommended style keyword list 1623 can be displayed in the same color as that of "Van Gogh style" 1612.

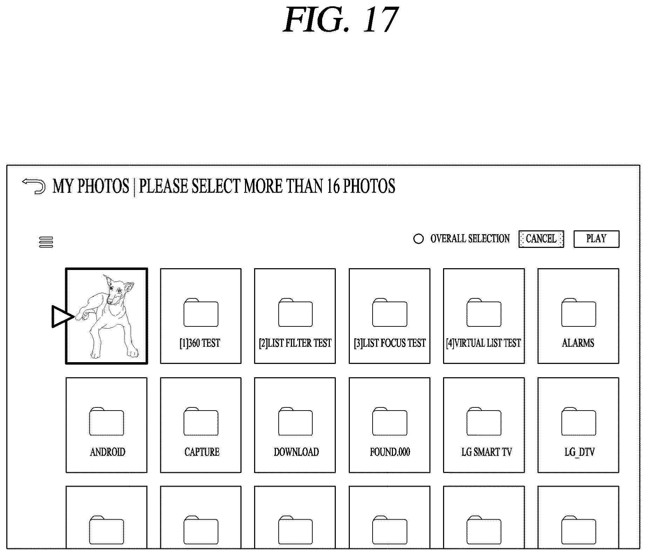

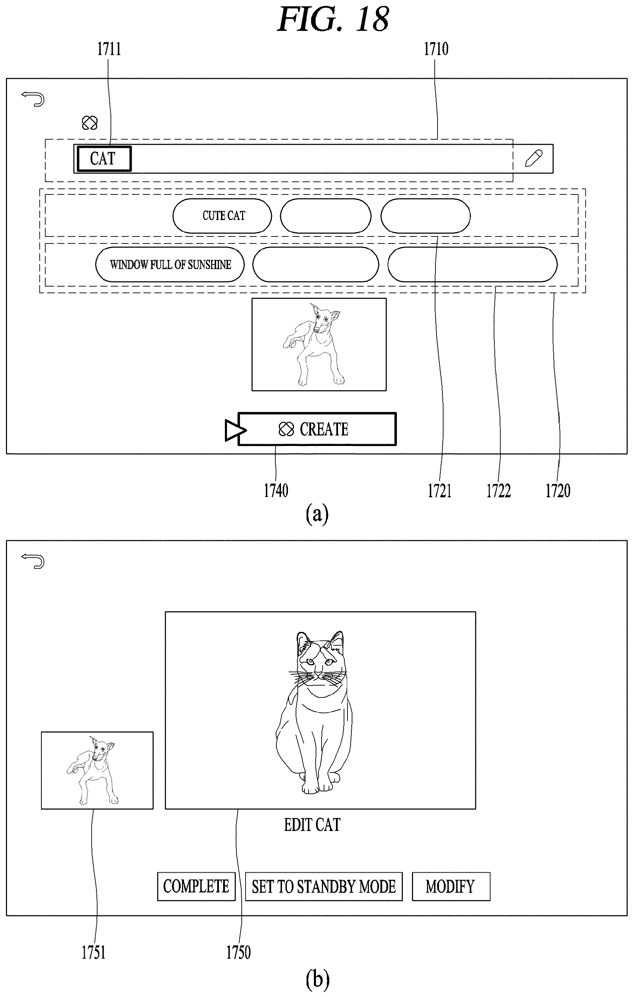

Meanwhile, a display device according to the present disclosure can be configured to modify an image by utilizing an editing prompt in an image editing application. In this regard, FIGS. 17 and 18 show exemplary screens of a display device for editing an image by utilizing an editing prompt in an image editing application according to the present disclosure.

Referring to FIGS. 1 to 18, the display device 100 for editing an image by utilizing an editing prompt according to the present disclosure will be described. In this regard, each component of the display device 100 can be linked to the remote control device 200 and the generative AI server 300.

A key input or voice input into the remote control device 200 associated with an image editing request can be received. In response thereto, the generative AI output module 171 can execute an image editing application to receive a user input for image editing. For example, an image editing application execution screen of FIG. 17 can be displayed on the display 180. Subsequently, one image can be selected from among one or more images displayed on the screen. For example, a picture of a puppy can be selected in FIG. 17.

In response to the selection of one image, the generative AI output module 171 can generate an editing prompt associated with the selected image. For example, the editing prompt can be a "puppy." A user can modify the editing prompt. For example, a user can utter "cat" while holding down the AI button. The editing prompt can be modified to "cat". The generative AI output module 171 can transmit an editing prompt to the generative AI control module 172.

The generative AI control module 172 can generate, in response to receiving an editing prompt from the generative AI output module 171, a recommended keyword request including the editing prompt. The generative AI control module 172 can transmit the recommended keyword request to the generative AI server 300. The request can determine at least one highlight keyword in the editing prompt and make a request for generating a recommended keyword list associated with the determined highlight keyword. In response to transmitting a recommended keyword request, the generative AI control module 172 can receive at least one or more highlight keywords and recommended keyword lists from the server 300. The generative AI control module 172 can transmit one or more highlight keywords and recommended keyword lists to the generative AI output module 171.

The generative AI output module 171 can receive at least one or more highlight keywords and recommended keyword lists based on an editing prompt from the generative AI control module 172. For example, the generative AI output module 171 can receive the highlight keyword "cat". The generative AI output module 171 can receive a recommended keyword list associated with "cat". The generative AI output module 171 can highlight parts associated with highlight keywords in the editing prompt and recommended keyword list. The generative AI output module 171 can display the highlighted editing prompt and recommended keyword list on the display 180.

As shown in (a) of FIG. 18, a prompt input window including an editing prompt 1710 can be displayed in a first area, and a recommended keyword list 1720 can be displayed in a second area. The editing prompt 1710 can highlight a keyword 1711 corresponding to the highlight keyword "cat". The recommended keyword list 1720 displayed in the second area can include at least one or more recommended keyword lists 1721, 1722 associated with the highlighted keyword 1711. The recommended keyword list 1720 can include one or more recommended keyword lists 1721, 1722 associated with "cat".

In response to the input of a "create" button 1740 in (a) of FIG. 18, the generative AI control module 172 can generate an image generation request including the editing prompt 1710. In response to transmitting an image generation request to the server 300, the generative AI control module 172 can receive an AI image storage location where the generated AI image is stored based on the editing prompt 1710 from the server 300. The generative AI control module 172 can download an image by requesting a separate external database where the image is stored based on the received AI image storage location. As shown in (b) of FIG. 18, an AI image 1750 generated based on the editing prompt 1710 can be displayed on the display 180. An image 1751 prior to editing can also be displayed along therewith on the display 180.

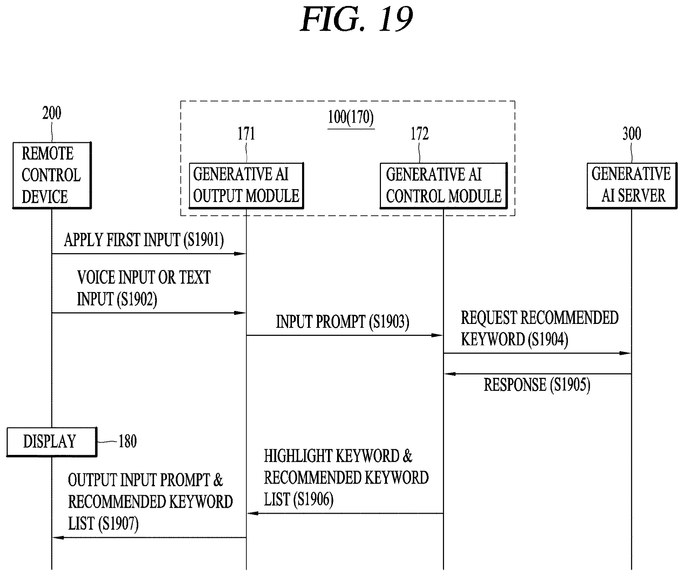

Meanwhile, a method for updating a prompt by providing keyword highlights and recommended keywords performed by a display device and an AI system including the same according to the present disclosure will be described. In this regard, FIG. 19 shows a flowchart of a method for updating a prompt by providing keyword highlights and recommended keywords performed by a display device and an AI system including the same. Referring to FIGS. 1 to 19, a method for updating a prompt by providing keyword highlights and recommended keywords can be performed by the processor 170 of the display device 100.

When a first input less than a threshold time period is applied to the AI shortcut key 202 of the remote control device 200 (S1901), the generative AI output module 171 can execute a generative AI application. Following the first input, a second input longer than the threshold time period can be applied to the AI shortcut key. While the second input is applied, a voice input or text input associated with AI image generation can be transmitted to the generative AI output module 171 (S1902).

Upon receiving the voice input or text input, the generative AI output module 171 can generate a corresponding input prompt and transmit it to the generative AI control module 172 (S1903). Upon receiving the input prompt, the generative AI control module 172 can generate a recommended keyword request including the input prompt. The generative AI control module 172 can transmit a request to the server 300 so as to determine one or more highlight keywords in the input prompt, and generate recommended keyword lists associated with the determined keywords (S1904).

In response to transmitting a recommended keyword request, the generative AI control module 172 can receive a response including one or more highlight keywords and recommended keyword lists from the server 300 (S1905). The generative AI control module 172 can transmit one or more highlight keywords and recommended keyword lists included in the response to the generative AI output module 171 (S1906).

The AI output module 171 can receive one or more highlight keywords and recommended keyword lists based on the input prompt. The generative AI output module 171 can highlight parts associated with highlight keywords in the input prompt and recommended keyword list. The generative AI output module 171 can display the highlighted input prompt and recommended keyword list on the display 180 (S1907). The input prompt displayed on the screen can have one or more keywords highlighted.

Meanwhile, a method for updating a prompt by providing keyword highlighting and recommended keywords performed by a display device according to another aspect of the present disclosure is not limited thereto, and can be applied in various ways in combination with the embodiments of FIGS. 1 to 19.

In the above, a display device for updating a prompt by providing keyword highlights and recommended keywords according to this specification and an AI system including the same have been described. The technical effects of a display device for updating a prompt by providing keyword highlights and recommended keywords according to this specification and an AI system including the same can be summarized as follows, but are not limited thereto.

According to this specification, convenience for a prompt input method can be provided when generating an AI image using a digital TV. A user can conveniently generate an image by utilizing recommended keywords provided without having to write or modify a prompt on his or her own. In addition, keywords can be determined in an input prompt by utilizing AI and highlighted along with recommended keywords associated therewith, thereby allowing core keywords to be intuitively recognized within the prompt.

According to this specification, a prompt including specific and diverse elements for generating an AI image can be generated. Various recommended keywords can be provided based on a user input prompt, thereby generate images that are similar to and richer than an image desired by a user.

According to this specification, a customized prompt according to a user preference can be provided when generating an AI image. In addition, a user can utilize his or her own generated and modified AI image as a standby screen of a display device, thereby allowing a more personalized product experience.

Meanwhile, a display device for updating a prompt by providing keyword highlights and recommended keywords according to this specification can be referred to as an AI concierge that performs an AI function. A display device can identify core keywords in a prompt entered by a user to generate an image and provide recommended keywords associated therewith. A display device can provide a recommended keyword list optimized for a user by referring to the user's previous AI image generation information. In addition, a display device can generate and provide a customized AI image based on an input prompt in consideration of a preference for each user. Due to this, a user can easily write and modify a prompt by utilizing recommended keywords provided by a display device without having to write or modify the prompt in detail on his or her own.

In addition, a display device can provide random prompt and editing prompt functions so as to provide various AI image generation services. In this regard, a user can be provided with idea keywords and a random prompt based on the idea keywords to easily generate a desired image by modifying the random prompt. In addition, a user can easily modify an image in a desired direction by utilizing an editing prompt associated with image editing.

The foregoing present disclosure can be implemented as computer-readable codes on a program-recorded medium. The computer-readable medium can include any type of recording device in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and also include a device implemented in the form of a carrier wave (e.g., transmission over the Internet). In addition, the computer can also include the controller of the terminal. Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A display device (100) comprising:
a user input interface (150) configured to receive a voice input or text input subsequent to a key input of a specific button on a remote control device (200);
a display (180) configured to display an input prompt (510) corresponding to the voice input or text input and a recommended keyword list (520) based on the input prompt (510); and
a processor (170) configured to highlight at least one or more keywords in the input prompt (510) and display recommended keyword lists (520) associated with the highlighted keywords (511, 512) on the display (180).

2. The display device (100) of claim 1, wherein the processor (170) comprises:
a generative AI output module (171) configured to execute a generative AI application and display the input prompt and the recommended keyword list on the display (180); and
a generative AI control module (172) configured to acquire at least one or more highlight keywords based on the input prompt and the recommended keyword lists in conjunction with a generative AI server (300).

3. The display device (100) of claim 2, wherein the generative AI output module (171) is configured to:
generate, in response to receiving the voice input or the text input from the user input interface (150), a corresponding input prompt and transmit it to the generative AI control module (172);
receive, in response to transmitting the input prompt, one or more highlight keywords and recommended keyword lists based on the input prompt from the generative AI control module (172);
highlight parts associated with the highlight keywords in the input prompt and recommended keyword list; and
display the highlighted input prompt (510) and recommended keyword list (520) on the display (180).

4. The display device (100) of claim 3, wherein the generative AI control module (172) is configured to:
generate, in response to receiving the input prompt from the generative AI output module (171), a recommended keyword request including the input prompt;
determine at least one or more highlight keywords in the input prompt, and transmit the recommended keyword request to the generative AI server (300) so as to generate recommended keyword lists associated with the determined highlight keywords;
receive, in response to transmitting the recommended keyword request, at least one or more highlight keywords and recommended keyword lists based on the input prompt from the generative AI server (300); and
transmit the one or more highlight keywords and the recommended keyword lists to the AI output module (171).

5. The display device (100) of claim 3, wherein the one or more highlight keywords comprise:
at least one of a first keyword associated with an object included in the input prompt, a second keyword associated with a background included in the input prompt, and a third keyword associated with an image style included in the input prompt, and
wherein keywords corresponding to the first keyword, the second keyword, and the third keyword in the input prompt are respectively highlighted in a first color, a second color, and a third color.

6. The display device (100) of claim 5, wherein the first keyword associated with the object comprises:
at least one of keywords referring to the object or keywords describing a feature of the object, and
wherein keywords corresponding to a keyword referring to the object and a keyword describing the feature of the object in the input prompt are respectively highlighted in different colors.

7. The display device (100) of claim 5, wherein the recommended keyword list (520) comprises:
at least one of a recommended object keyword list associated with the first keyword (521), a recommended background keyword list associated with the second keyword (522), and a recommended style keyword list associated with the third keyword (523), and
wherein the recommended object keyword list (521), the recommended background keyword list (522), and the recommended style keyword list (523) in the recommended keyword list (520) are respectively highlighted with a first color, a second color, and a third color.

8. The display device (100) of claim 7, wherein the generative AI output module (171) is configured to:
update, in response to one recommended keyword (721a) being selected from the recommended keyword list, the input prompt (710) with an update prompt (730) based on the selected recommended keyword; and
display the update prompt (730) on the display (180).

9. The display device (100) of claim 8, wherein the generative AI output module (171) is configured to:
replace, when one recommended keyword (721a, 921a) is selected from the recommended object keyword list (721) or recommended background keyword list (921), a keyword (711, 911) corresponding to the selected recommended keyword (721a, 921a) in the input prompt (710, 910) with the selected recommended keyword (721a, 921a); and
append, when one recommended keyword (1021a) is selected from among the recommended style keyword list (1021), the selected recommended keyword (1021a) after the input prompt (1010).

10. The display device (100) of claim 8, wherein the generative AI output module (171) is configured to transmit the update prompt to the generative AI control module (172),
the generative AI control module (172) is configured to acquire at least one or more update highlight keywords and update recommended keyword lists based on the update prompt in conjunction with the generative AI server (300) and transmit them to the generative AI output module (171), and
the generative AI output module (171) is configured to highlight parts associated with the update highlight keywords in the update prompt and the update recommended keyword list and display them on the display (180).

11. The display device (100) of claim 3, wherein the generative AI control module (172) is configured to:
generate, in response to a key input or voice input into a remote control device (200) associated with an image generation request, an image generation request including the input prompt;
transmit the image generation request to the generative AI server (300) so as to generate an AI image based on the input prompt;
receive, in response to transmitting the image generation request, an image storage location representing a location where the AI image is stored from the generative AI server (300);
access, based on the image storage location, a separate database (400) to download the AI image; and
store the downloaded AI image (1310) in a database (140) of the display device (100), and transmit it to the generative AI output module (171) so as to be displayed on the display (180) along with the input prompt (1311).

12. The display device (100) of claim 11, wherein the generative AI output module (171) is configured to:
display the AI image (1310) as a standby screen of the display (180) in response to a key input or voice input into a remote control device (200) associated with a request to set a standby mode.

13. The display device (100) of claim 2, wherein the display (180) operates in a first generative AI execution mode or a second generative AI execution mode, and
wherein the generative AI output module (171) is configured to:
display, when the first generative AI execution mode is triggered, an AI image generation guide screen including a prompt input window configured to receive the input prompt on the display (180); and
display, when the second generative AI execution mode is triggered, an AI image generation idea acquisition screen including one or more recommended words on the display (180).

14. The display device (100) of claim 13, wherein in the second generative AI execution mode, the generative AI output module (171) is configured to generate, in response to one word being selected from among the one or more recommended words, a random prompt including the selected word to transmit it to the generative AI control module (172),
the generative AI control module (172) is configured to acquire at least one or more highlight keywords and recommended keyword lists based on the random prompt in conjunction with the generative AI server (300) and transmit them to the generative AI output module (171), and
the generative AI output module (171) is configured to highlight keywords associated with the highlight keywords in the random prompt and the recommended keyword list and display them on the display (180).

15. The display device (100) of claim 11, wherein the generative AI output module (171) is configured to:
execute, in response to a key input or voice input into a remote control device (200) associated with an image editing request, an image editing application to display one or more images stored in the database (140) on the display (180); and
generate, in response to one image being selected from among the one or more images, an editing prompt associated with the selected image to transmit it to the generative AI control module (172),
the generative AI control module (172) is configured to acquire at least one or more highlight keywords and recommended keyword lists based on the editing prompt in conjunction with the generative AI server (300) and transmit them to the generative AI output module (171), and
the generative AI output module (171) is configured to highlight keywords (1511) associated with the highlight keywords in the editing prompt (1510) and the recommended keyword list (1520) and display them on the display (180).
